# FASCICULE DE BREVET EUROPEEN

(11) **EP 4 356 166 B1**
(45) Date de publication et mention de la délivrance du brevet: **04.06.2025**
(21) Numéro de dépôt: 22733107.1
(22) Date de dépôt: 14.06.2022
(51) Int. Cl.: G01T 1/20, G01T 3/06

(54) **DÉTECTEUR DE RAYONNEMENTS IONISANTS**
DETEKTOR FÜR IONISIERENDE STRAHLUNG
IONIZING RADIATION DETECTOR

(30) Priorité: 14.06.2021 FR 2106228
(43) Date de publication de la demande: 24.04.2024
(73) Titulaire: Commissariat à l'Energie Atomique et aux Energies Alternatives, 75015 Paris (FR)
(72) Inventeur: FRANGVILLE, Camille, 91191 GIF SUR YVETTE Cedex (FR); HAMEL, Matthieu, 91191 GIF SUR YVETTE Cedex (FR); BERTRAND, Guillaume, 91191 GIF SUR YVETTE Cedex (FR)
(74) Mandataire: Cabinet Nony
(86) Numéro de dépôt international: PCT/EP2022/066180
(87) Numéro de publication internationale: WO 2022/263449

(56) Documents cités:
- EP-A1- 3 591 025
- CN-A- 111 060 953
- US-A- 5 399 869
- US-A1- 2011 101 228

## Description

### Domaine technique

La présente invention concerne les détecteurs de rayonnements ionisants, en particulier les détecteurs à scintillation.

### Technique antérieure

Les détecteurs à scintillation sont utilisés dans les systèmes de mesure pour la détection des rayonnements ionisants. Ils comportent un ou plusieurs scintillateurs qui ont la capacité d'émettre des photons lorsqu'ils absorbent une particule ou un rayonnement ionisant.

Ils permettent par exemple de détecter la présence de sources radioactives à la surface ou à l'intérieur d'objets ou de personnes en fonction de la nature du rayonnement. Il est utile de pouvoir à la fois détecter et identifier de manière qualitative ou quantitative la nature de ces rayonnements.

Il existe cependant de nombreuses natures de rayonnement, par exemple les rayonnements alpha, beta, gamma, ou encore les neutrons rapides et thermiques.

Il est connu d'utiliser plusieurs capteurs pour détecter simultanément divers types de rayonnement, par exemple lors d'une recherche de contamination ou de source radioactive inconnue.

Cependant il est complexe et relativement coûteux de déployer plusieurs appareils permettant de détecter la pluralité de ces rayonnements.

Certains détecteurs permettent de détecter jusqu'à deux ou trois natures de rayonnements grâce un seul capteur.

La demande FR3083622 décrit par exemple un scintillateur plastique comportant des éléments chimiques permettant la détection et discrimination des neutrons rapides, neutrons thermiques et rayons gamma. Ce détecteur ne permet toutefois qu'une discrimination triple et ne permet pas de différencier les rayonnements alpha ou bêta.

Il est d'autre part connu d'utiliser un détecteur comportant plusieurs scintillateurs empilés les uns sur les autres et couplés à un système de photo détection.

Un tel détecteur est communément appelé « détecteur *phoswich* », le terme anglo-saxon « *phoswich* » étant une contraction de « *phosphor sandwich* ».

Les différents scintillateurs qui composent un détecteur *phoswich* sont choisis pour leurs propriétés de scintillation différentes, par exemple la constante de temps moyenne de décroissance de fluorescence. Cela se traduit directement sur la forme et la durée des impulsions lumineuses. Le signal lumineux émis par chacun des scintillateurs d'un détecteur *phoswich* exposé à un rayonnement est alors caractéristique du scintillateur produisant celui-ci.

Une analyse de forme du signal lumineux total collecté par le système de photo détection permet de remonter à la région, ou aux régions, d'interaction, et ainsi de discriminer les différents rayonnements à l'origine de ces interactions.

Certains détecteurs *phoswich* comportent des scintillateurs de type différent, à savoir des scintillateurs organiques et inorganiques.

Une structure de type *phoswich* organique/inorganique utilisant une analyse par forme d'impulsion est ainsi décrite dans l'article Usuda, S., Nucl. Instr. Methods A (1995, 356, 334-338). Ce détecteur n'est toutefois pas sensible aux neutrons rapides.

Par ailleurs, l'article Pellegrin, S. M. ; Whitney, C. ; Wilson, C. G. J. Microelectromech. Syst. (2010, 19, 1207-1214), décrit un détecteur *phoswich* sensible à la fois aux neutrons thermiques et aux neutrons rapides, mais qui n'est pas conçu pour détecter les rayonnements alpha ou bêta. Enfin, une autre structure de type *phoswich* est connue de la demande CN111060953 A. Cette demande divulgue un détecteur de rayonnement comportant une structure active d'un rayonnement ionisant incident (α, β, γ et neutrons), la structure active comportant trois scintillateurs.

De plus, les systèmes décrits ci-dessous ne sont pas ou sont difficilement transportables, et permettent uniquement de caractériser les rayonnements sans information spectrométrique sur la nature de la source.

### Exposé de l'invention

Il existe par conséquent un besoin pour perfectionner encore les détecteurs de rayonnements ionisants, afin de disposer d'un détecteur relativement compact et peu coûteux, pouvant discriminer plusieurs natures de rayonnement différentes, notamment plus de trois, Il demeure également un intérêt pour un détecteur pouvant de plus fournir une information spectrale sur la nature des rayonnements détectés.

### Résumé de l'invention

L'invention vise à répondre à ce besoin, selon un premier de ses aspects, avec un détecteur de rayonnement, tel que défini dans la revendication 1, comportant une structure active présentant une face d'entrée et une face de sortie d'un rayonnement ionisant incident, la structure active comportant :
∘ un premier scintillateur organique comportant au moins un matériau neutrophage et permettant une discrimination entre neutrons rapides, neutrons thermiques et photons,
∘ au moins un deuxième scintillateur disposé devant le premier et capable de détecter préférentiellement les rayonnements alpha et/ou béta,

Les deux scintillateurs présentent de par le choix de leurs constituants des constantes de décroissance moyenne d'impulsion différentes et le deuxième a une épaisseur plus faible que le premier.

Le premier scintillateur peut être qualifié de proximal lorsqu'il est le plus proche d'un convertisseur photons-électrons du détecteur, et le deuxième de distal, car plus éloigné du convertisseur que le premier scintillateur.

Par deuxième scintillateur placé « devant » le premier, il faut comprendre disposé de manière à être intercepté par le rayonnement ionisant avant le premier.

L'assemblage de scintillateurs de propriétés différentes permet de différencier les réponses du détecteur selon la nature du ou des rayonnements ionisants auxquels il est exposé.

Par « capable de détecter préférentiellement un rayonnement alpha et/ou béta», on désigne un scintillateur dont les propriétés, notamment son épaisseur, sa position et sa composition chimique, sont choisies pour favoriser les interactions avec le rayonnement alpha et/ou bêta tout en minimisant les interactions avec d'autres types de rayonnement, notamment les rayons gamma.

Par « constante de décroissance moyenne », on désigne ici la valeur moyenne pondérée sur la base de la teneur massique des différentes composantes temporelles du phénomène de fluorescence.

Par « photons », on désigne ici des rayons X ou des rayons gamma.

Ainsi, le détecteur selon l'invention peut effectuer une discrimination parmi plus de trois natures de rayonnements ionisants, notamment quatre, à savoir entre les neutrons rapides, les neutrons thermiques, les photons, et l'un au moins des rayonnements alpha ou bêta, ou les deux.

Selon l'invention telle que revendiquée, la structure active comporte au moins un troisième scintillateur disposé devant le deuxième scintillateur, le troisième scintillateur étant capable de détecter préférentiellement les rayonnements alpha. Ce troisième scintillateur est alors plus éloigné du convertisseur que les premier et deuxième scintillateurs.

Le deuxième scintillateur permet de préférence la détection différenciée des rayonnements bêta. Le détecteur peut alors effectuer une discrimination quintuple, c'est-à-dire parmi au moins cinq natures de rayonnements ionisants.

De préférence, le détecteur comporte un convertisseur photon-électron à gain, notamment un tube photomultiplicateur (PMT) ou un photomultiplicateur en silicium (SiPM), disposé derrière la face de sortie de la structure active pour collecter la lumière émise au sein des différents scintillateurs.

La lumière collectée est de préférence amplifiée et transformée en impulsions électroniques par le photomultiplicateur. Ces impulsions sont ensuite numérisées par des appareils d'électronique de mesure, par exemple une carte électronique programmable dédiée ou un numériseur commercial.

Un tel détecteur permet d'effectuer une discrimination entre les natures de rayonnement ionisant sans nécessiter plusieurs séries de mesures successives, réduisant de fait le nombre d'utilisations du détecteur, et le temps et le coût engagé pour la recherche de sources radioactives.

Le signal numérique généré peut être traité suivant diverses méthodes, notamment la méthode de discrimination par forme d'impulsion (en anglais, PSD pour « *pulse shape discrimination* »). Cette méthode, connue de l'homme du métier, se fonde sur la différence dans la forme retardée de l'impulsion.

Pour pouvoir revenir à la nature du rayonnement ionisant induisant la scintillation, on peut trier les différentes impulsions à la fois selon leur morphologie et selon les propriétés photo-physiques de la structure active.

Il convient donc d'une part que chaque scintillateur de la structure active génère un signal qui lui est caractéristique.

Pour ce faire, on réalise de préférence le détecteur de manière à ce que chaque scintillateur présente une constante de décroissance moyenne de photoluminescence qui lui soit propre et qui ne puisse être confondue avec celle d'un autre scintillateur.

De préférence, les premier et deuxième scintillateurs présentent une valeur de constante de décroissance moyenne de photoluminescence décroissante en progressant de l'entrée vers la sortie. Les premier, deuxième et troisième scintillateurs peuvent présenter une valeur de constante de décroissance moyenne de photoluminescence décroissante en progressant du scintillateur distal vers le proximal.

La différence entre les valeurs des constantes de décroissance moyenne de deux scintillateurs adjacents est de préférence comprise entre 10 et 300 ns, mieux entre 25 et 250ns, mieux entre 30 et 250 ns (bornes incluses). Par exemple, pour un détecteur comportant trois scintillateurs, les premier, deuxième et troisième scintillateurs peuvent présenter une constante de décroissance moyenne de l'ordre de 10 ns, 40 ns et 70 ns, respectivement.

De préférence, la constante de décroissance moyenne du premier scintillateur est comprise entre 1 et 20ns, notamment de l'ordre de 10 ns.

Il convient d'autre part de choisir l'épaisseur de chaque scintillateur selon la nature du ou des rayonnements avec lesquels on souhaite que ce scintillateur ait des interactions majoritaires.

De préférence, les scintillateurs ont une épaisseur croissante en progressant de l'entrée vers la sortie.

Le premier scintillateur, qui peut être le scintillateur proximal, c'est-à-dire le plus proche du convertisseur, peut être le plus épais et a par exemple une épaisseur comprise entre 3 et 100 mm, de préférence entre 5 et 10 mm, ce qui permet de maximiser l'interaction avec les neutrons et les photons et leur discrimination.

Le deuxième scintillateur peut être capable de détecter préférentiellement les rayonnements bêta et a de préférence une épaisseur comprise entre 50 et 250 microns, de préférence entre 100 et 250 microns, de préférence égale à 150 microns environ.

Une telle épaisseur permet une interaction relativement importante avec les rayonnements bêta, tout en minimisant les interactions avec d'autres rayonnements, notamment les rayons gamma.

Un scintillateur capable de détecter préférentiellement les rayonnements alpha, notamment le troisième scintillateur (qui peut être le plus distal des trois scintillateurs par rapport au convertisseur) disposé à l'entrée de la structure active, a de préférence une épaisseur comprise entre 1 et 50 microns, mieux entre 10 et 20 microns.

Toujours selon l'invention telle que revendiquée, la différence entre les indices de réfraction de deux scintillateurs adjacents est d'au plus 0,5, mieux d'au plus 0,3, encore mieux d'au plus 0,05.

Par exemple, le premier scintillateur présente un indice de réfraction d'environ 1,58, et le deuxième scintillateur présente un indice de réfraction d'environ 1,60.

Une faible différence entre les indices de réfraction permet de limiter les pertes de photons dans le détecteur, et d'améliorer ainsi les capacités de détection du détecteur.

### Composition chimique du premier scintillateur

Le premier scintillateur (qui peut être le plus proximal des trois scintillateurs par rapport au convertisseur) présente une composition chimique permettant une discrimination entre neutrons rapides, neutrons thermiques et photons.

Le premier scintillateur est un scintillateur dit plastique, de préférence à matrice polymère organique, de préférence de poly(styrène-co-acide méthacrylique), comportant :
- au moins un élément fluorescent primaire, et
- au moins un élément neutrophage.

Par « élément neutrophage » ou « matériau neutrophage », on désigne un élément ou un matériau ayant une capacité à absorber un neutron thermique tout en émettant une particule secondaire « lourde ». L'élément ou le matériau neutrophage comporte par exemple du lithium, notamment sous sa forme naturelle, sous sa forme isotopiquement enrichie en lithium-6, ou tout enrichissement isotopique entre le lithium naturel et le lithium-6, ou du bore, notamment le bore-10, ou encore le cadmium et le gadolinium.

Dans le cas du bore, on peut utiliser un dopage connu par l'homme du métier avec des molécules riches en bore, par exemple des isomères du carborane, sous sa forme *ortho, méta* ou *para.*

Dans le cas du lithium, on peut utiliser un dopage connu par l'homme du métier avec des carboxylates de lithium, ou encore d'autres stratégies telles que l'utilisation d'éther couronnes ou encore l'utilisation de nanoparticules à base de lithium.

De préférence, ledit élément fluorescent primaire est choisi parmi le biphényle, le *para*-terphényle, le méta-terphényle, et le 2,5-diphényloxazole (PPO). Les spectres d'absorption et d'émission de tels éléments sont par exemple centrés aux alentours de 330 nm et 370 nm, respectivement.

Le premier scintillateur comporte de préférence au moins un élément fluorescent secondaire, par exemple choisi parmi le bis-méthylstyrylbenzène (bis-MSB), le 9,10-diphénylanthracène (9,10-DPA), et le 1,4-bis(5-phényl-2-oxazolyl) benzène (POPOP).

Cet élément permet de décaler la longueur d'onde d'émission des fluorophores primaires vers une longueur d'onde d'émission plus élevée. Le choix de la longueur d'onde d'émission est rendu possible par le choix du fluorophore secondaire dont l'homme du métier saura choisir la molécule la plus adaptée à son besoin.

De préférence, le premier scintillateur a un spectre d'émission dont le maximum est à une longueur d'onde comprise entre 400 et 630 nm, en particulier d'environ 425 nm.

### Scintillateur inorganique pour spectrométrie gamma

La structure active selon l'invention peut encore comporter un scintillateur inorganique capable d'effectuer une spectrométrie gamma.

Une telle structure active permet d'établir la description du profil énergétique des rayonnements gamma incidents, et ainsi éventuellement d'identifier la source des rayonnements.

Ce scintillateur est de préférence disposé à coté ou en dessous du premier scintillateur. Il peut également être disposé au sein du premier scintillateur.

Ce scintillateur a par exemple une épaisseur comprise entre 2 et 50 mm.

Ce scintillateur est par exemple à base de germanate de bismuth (BGO).

### Exemples de réalisation

Dans un premier exemple de réalisation de l'invention, l'ensemble des scintillateurs du détecteur sont de type scintillateur plastique.
Le deuxième et/ou le troisième scintillateur sont par exemple obtenus commercialement auprès de fournisseurs de scintillateurs plastiques (par exemple, le scintillateur EJ-240 d'Eljen Technoloy ou le BC-444 de Saint-Gobain Cristaux et Détecteurs, présentant une constante de décroissance moyenne de photoluminescence d'environ 280 ns).
En variante, les deuxième et/ou le troisième scintillateurs peuvent être préparés selon le procédé décrit dans la demande FR3075977.

Dans un autre exemple de réalisation, au moins un scintillateur du détecteur, de préférence le scintillateur disposé à l'entrée de la structure active, est de type inorganique. Ce scintillateur est par exemple à base de sulfure de zinc dopé argent (ZnS:Ag) ou de pyrosilicate de gadolinium dopé cérium (Gd₂Si₂O₇:Ce).

Dans un autre exemple de réalisation, au moins un scintillateur du détecteur, de préférence le scintillateur disposé en dessous ou à côté du premier scintillateur, est un scintillateur inorganique. Ce scintillateur est par exemple à base de germanate de bismuth (BGO).

### Procédé de détection et discrimination des rayonnements ionisants

L'invention a encore pour objet un procédé pour la détection et la discrimination de rayonnements ionisants en utilisant un détecteur tel que défini plus haut, et dont la face d'entrée est exposée à une source de rayonnement, le procédé comportant l'étape consistant à :
∘ Analyser, à partir au moins de la connaissance des constantes de décroissance moyenne des scintillateurs, le signal optique généré par la structure active afin de discriminer la nature du rayonnement parmi au moins 4 types de rayonnements différents, de préférence au moins 5.
De préférence et comme mentionné plus haut, le signal optique généré par la structure active est collecté par un convertisseur photon-électron à gain, notamment un tube photomultiplicateur (PMT) ou un photomultiplicateur en silicium (SiPM), afin d'être converti en impulsion électrique.
De préférence, la discrimination entre les différents rayonnements s'effectue grâce à une méthode de discrimination par forme d'impulsion (PSD).
On peut en outre analyser de manière spectrométrique la composante gamma parmi les rayonnements incidents, si le détecteur comporte un scintillateur inorganique le permettant.

### Brève description des dessins

[Fig 1] représente de manière partielle et schématique un exemple de détecteur selon l'invention,
[Fig 2] représente de manière partielle et schématique un exemple de réalisation d'un détecteur,
[Fig 3a], [Fig 3b], et [Fig 3c] illustrent des résultats de détection lorsque le détecteur de la figure 2 est exposé à une source de neutrons et rayons gamma émis conjointement par du californium-252,
[Fig 4a] et [Fig 4b] illustrent des résultats de détection lorsque le détecteur de la figure 2 est exposé à une source de rayonnement bêta de carbone-14,
[Fig 5a] et [Fig 5b] illustrent des résultats de détection lorsque le détecteur de la figure 2 est exposé à une source de rayonnement alphalgamma de plutonium-239,
[Fig 6a], [Fig 6b], [Fig 6c] et [Fig 6d] illustrent des résultats de détection lorsque le détecteur de la figure 2 est exposé simultanément à deux sources de rayonnement, à savoir le plutonium-239 et le californium-252,
[Fig 7a], [Fig 7b], [Fig 7c] et [Fig 7d] illustrent des résultats de détection lorsque le détecteur de la figure 2 est exposé simultanément à deux sources de rayonnement, à savoir le carbone-14 et le californium-252,
[Fig 8a], [Fig 8b] et [Fig 8c] illustrent des résultats de détection lorsque le détecteur de la figure 2 est exposé simultanément à deux sources de rayonnement, à savoir le carbone-14 et le plutonium-239,
[Fig 9a], [Fig 9b], [Fig 9c], [Fig 9d] et [Fig 9e] illustrent des résultats de détection lorsque le détecteur de la figure 2 est exposé simultanément à trois sources de rayonnement, à savoir le carbone-14, le plutonium-239, et le californium-252,
[Fig 10] représente de manière partielle et schématique un autre exemple de réalisation d'un détecteur,
[Fig 11a], [Fig 11b], et [Fig 11c] illustrent des résultats de détection lorsque le détecteur de la figure 10 est exposé à une source de neutrons et rayons gamma émis conjointement par du californium-252,
[Fig 12a] et [Fig 12b] illustrent des résultats de détection lorsque le détecteur de la figure 10 est exposé à une source de rayonnement bêta de carbone-14,
[Fig 13a] et [Fig 13b] illustrent des résultats de détection lorsque le détecteur de la figure 10 est exposé à une source de rayonnement alphalgamma de plutonium-239,
[Fig 14a], [Fig 14b], [Fig 14c] et [Fig 14d] illustrent des résultats de détection lorsque le détecteur de la figure 10 est exposé simultanément à deux sources de rayonnement, à savoir le curium-244 et le californium-252,
[Fig 15a], [Fig 15b] et [Fig 15c] illustrent des résultats de détection lorsque le détecteur de la figure 10 est exposé simultanément à deux sources de rayonnement, à savoir le carbone-14 et le curium-244,
[Fig 16a], [Fig 16b], [Fig 16c] et [Fig 16d] illustrent des résultats de détection lorsque le détecteur de la figure 10 est exposé simultanément à deux sources de rayonnement, à savoir le carbone-14 et le californium-252,
[Fig 17a], [Fig 17b], [Fig 17c], [Fig 17d] et [Fig 17e] illustrent des résultats de détection lorsque le détecteur de la figure 10 est exposé simultanément à trois sources de rayonnement, à savoir le carbone-14, le plutonium-239 et le californium-252,
[Fig 18] représente de manière partielle et schématique un exemple de détecteur selon l'invention, présentant une forme hémisphérique,
[Fig 19a], [Fig 19b], [Fig 19c] et [Fig 19d] illustrent de manière schématique et partielle différents exemples d'un détecteur comportant quatre scintillateurs,
[Fig 20] représente de manière partielle et schématique un autre exemple de réalisation d'un détecteur, et
[Fig 21a], [Fig 21b], [Fig 21c], [Fig 21d] et [Fig 21e] illustrent des résultats de détection lorsque le détecteur de la figure 19a est exposé simultanément à trois sources de rayonnement, à savoir le carbone-14, le plutonium-239 et le californium-252.

### Description détaillée

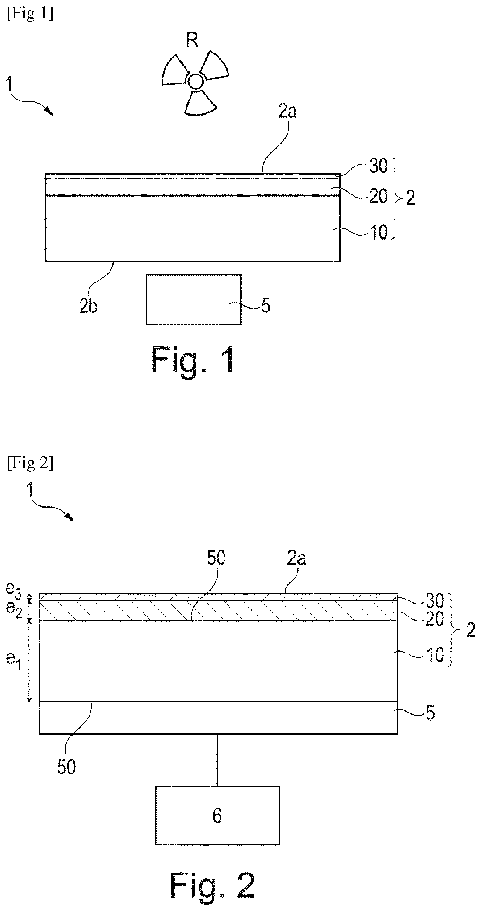

On a illustré à la figure 1 un exemple de détecteur de rayonnement 1 selon l'invention. Le détecteur 1 comprend une structure active 2 présentant une face 2a d'entrée du rayonnement et une face 2b de sortie du rayonnement non entièrement arrêté par la structure active. La source du rayonnement R à détecter est placée du côté de la face d'entrée 2a.

Dans l'exemple considéré, la structure active 2 se présente comme un empilement de trois couches de détection comportant chacune un scintillateur d'épaisseur donnée, les scintillateurs ayant une épaisseur croissante en progressant de l'entrée 2a de détecteur vers la sortie 2b.

Ainsi, le scintillateur 30, disposé à l'avant du détecteur, présente l'épaisseur la plus fine. Le scintillateur 20 est disposé directement derrière le scintillateur 30 et présente une épaisseur plus importante que le scintillateur 30. Enfin, le scintillateur 10 est disposé derrière le scintillateur 20 et présente l'épaisseur la plus large des trois scintillateurs.

Une telle structure active est par exemple générale de forme cylindrique ou parallélépipédique.

Le détecteur comporte en outre un convertisseur tel qu'un photomultiplicateur 5, disposé à l'arrière de la structure active 2, c'est-à-dire du côté de la face de sortie 2b, qui collecte la lumière émise au sein des différents scintillateurs 10, 20 et/ou 30 et transforme le signal optique collecté en signal électrique. Le signal électrique généré présente des impulsions caractéristiques de l'énergie déposée par les rayonnements ionisants dans le détecteur.

Les scintillateurs de la structure active 2 sont conçus de manière à présenter des propriétés de réponse au rayonnement ionisant différentes, ce qui permet de trier les différentes impulsions afin d'identifier la nature du ou des rayonnements ionisants induisant la scintillation.

Le scintillateur 10 est par exemple un scintillateur plastique dont la composition permet une discrimination entre neutrons rapides, neutrons thermiques et rayons gamma, comme cela est décrit plus bas.

Le scintillateur 20 est par exemple un scintillateur plastique capable de détecter préférentiellement les rayonnements bêta, et le scintillateur 30 détecte préférentiellement les rayonnements alpha.

Ainsi, une quintuple discrimination entre les différents rayonnements ionisants est possible avec une telle structure.

Chacun de ces scintillateurs présente d'une part une constante de décroissance moyenne de photoluminescence qui lui est propre et qui ne peut être confondue avec celle d'un autre scintillateur, et d'autre part une épaisseur choisie pour favoriser les interactions avec le ou les types de rayonnements à détecter.

### Exemple 1

On a illustré à la figure 2 un exemple de réalisation d'un détecteur 1 selon l'invention, comportant trois scintillateurs plastiques 10, 20 et 30.

Dans cet exemple, le scintillateur 10 est constitué d'une matrice polymère de poly(styrène-co-acide méthacrylique) comportant les éléments fluorescents 2,5-diphényloxazole (PPO) et 1,4-bis(5-phényl-2-oxazolyl) benzène (POPOP), et un élément absorbant de neutrons thermiques, l'alpha-valérate de lithium, ce dernier étant isotopiquement enrichi en isotope lithium-6 selon le procédé décrit dans la demande FR3083622.

Le scintillateur 10 est par exemple préparé indépendamment des scintillateurs 20 et 30, en ajoutant dans un ballon monocol du styrène, de l'acide méthacrylique, du PPO, du POPOP et de l'*alpha*-valérate de lithium. La solution est par la suite saturée en gaz neutre, puis on réalise 5 cycles de dégazage à froid et sous vide. On conditionne ensuite la solution dans un moule en verre étanche qui va conférer la forme finale au scintillateur. La solution est chauffée à 80 °C pendant 8 semaines sous atmosphère inerte. Le scintillateur 10 est extrait du moule, découpé puis poli.

Le scintillateur 10 ainsi obtenu présente une épaisseur e₁ d'environ 7000 µm et une constante de décroissance moyenne de photoluminescence τ₁ d'environ 3,3 ns.

Le scintillateur 10 présente par exemple un indice de réfraction d'environ 1,58.

Les scintillateurs 20 et 30 peuvent être préparés directement l'un sur l'autre. En variante, les scintillateurs 20 et 30 peuvent être collés l'un sur l'autre au moyen d'un liant optique.

Pour réaliser le scintillateur plastique 20, on peut suivre le procédé décrit dans la demande FR3075977, qui divulgue une méthode de préparation de scintillateurs plastiques présentant des constantes de décroissance moyenne comprises entre 2 et 88 ns.

On prépare par exemple un mélange de polystyrène, naphtalène, PPO et 9,10-diphénylanthracène, ces éléments étant solubilisés dans du toluène. La solution est versée sur une plaque de verre et étalée au moyen d'un dispositif d'étalement de type *doctor blade,* puis laissée sous ventilation durant l'évaporation du toluène, soit environ 2 jours, en fonction de l'épaisseur.

Dans l'exemple considéré mais non limitatif dans la préparation, le scintillateur 20 ainsi obtenu présente une épaisseur e₂ d'environ 150 µm et une constante de décroissance moyenne de photoluminescence τ₂ d'environ 35 ns.

Le scintillateur 20 présente par exemple un indice de réfraction d'environ 1,60.

On peut procéder suivant la même méthode pour préparer le scintillateur plastique 30 : on prépare un mélange de polystyrène, naphtalène, PPO et 9,10-diphénylanthracène solubilisés dans du toluène, dans des proportions par exemple différentes de celles utilisées pour la préparation du scintillateur 30, par exemple celles décrites dans la demande FR3075977

On peut verser et étaler la solution ainsi obtenue directement sur le scintillateur 20 au moyen du même dispositif d'étalement (par exemple de type *docteur blade*) puis la laisser sous ventilation pendant une durée d'environ deux heures pour l'évaporation du toluène.

Le scintillateur 30 ainsi obtenu présente une épaisseur e₃ d'environ 17 µm et une constante de décroissance moyenne de photoluminescence τ₃ d'environ 71 ns, et un indice de réfraction d'environ 1,60.

Le scintillateur 10 est relié aux scintillateurs 20 et 30 au moyen d'un liant optique 50, par exemple une graisse optique connue de l'homme du métier, de manière à ce que les trois scintillateurs soient disposés du plus fin au plus épais en progressant de l'entrée 2a vers la sortie 2b de la structure active, comme illustré à la figure 2.

D'autres types de liant optique sont envisageables, par exemple un ciment optique ou un liquide transparent visqueux d'indice optique, aussi appelé indice de réfraction, de l'ordre de 1,6 à 425 nm ou toute autre matériau qui soit transparent à la longueur d'onde d'émission des différents scintillateurs. On réalise par exemple un liant optique d'épaisseur 50 µm.

Dans cet exemple, les scintillateurs 10, 20 et 30 présentent un spectre d'émission dont le maximum est à une longueur d'onde de 425 nm pour le scintillateur 10, et 435 nm pour les scintillateurs 20 et 30.

Le détecteur 1 comporte en outre un photomultiplicateur 5, par exemple le tube photomultiplicateur commercial « Hamamatsu » (marque déposée) R6231, qui est couplé à la face de sortie 2b de la structure active 2, par exemple par le biais d'une graisse optique 50.

Le photomultiplicateur 5 est alimenté en haute tension, par exemple à 1070 V, et relié à un numériseur 6 afin de transformer le signal électrique en signal numérique.

A partir du signal numérique ainsi généré, on peut représenter les résultats de détection de différentes façons.

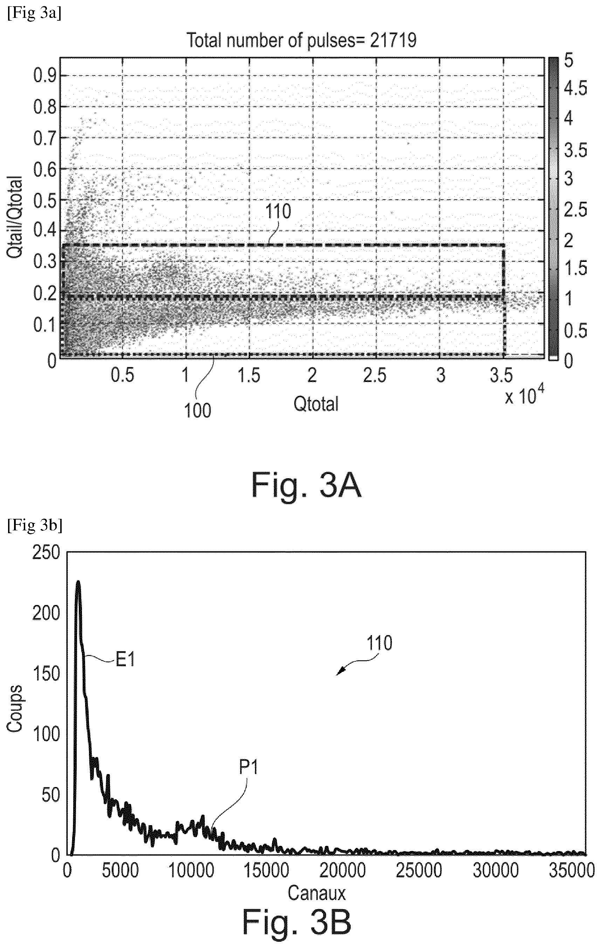

On peut par exemple tracer le spectre bidimensionnel représentant, pour chaque impulsion, le rapport Qₜₐᵢₗ/Qₜₒₜ de la charge retardée Qₜₐᵢₗ de l'impulsion sur la charge totale Qₜₒₜ de cette même impulsion en fonction de la charge totale Q_{tot.}, comme illustré pour différentes sources de rayonnement aux figures 3a, 4a, 5a, 6a, 7a, 8a et 9a.

La charge totale Qₜₒₜ est calculée par l'intégrale du courant porté par l'impulsion entre son début et 780 ns.

La charge retardée Qₜₐᵢₗ est calculée par l'intégrale du courant porté par l'impulsion entre 42 et 780 ns.

Le rapport Qₜₐᵢₗ/Qₜₒₜ fournit donc des indications sur la forme plus ou moins large de l'impulsion et permet de faire émerger des zones de regroupement des impulsions par type d'interaction.

Afin de déterminer des zones d'intérêt en fonction des différentes natures de rayonnement ionisant, le détecteur 1 est d'abord soumis à une seule source de rayonnement à la fois. Ces zones définies peuvent ensuite être utilisées ultérieurement pour discriminer de multiples natures de rayonnement ionisant.

Le détecteur 1 est par exemple soumis à une source neutron/gamma de californium-252 disposée à environ 8 cm de la face d'entrée 2a.

Des neutrons thermiques sont générés par thermalisation partielle de la source de californium-252, qui est blindée par 5 cm de polyéthylène haute densité (PEHD) et 3 cm de plomb, ce qui permet de dégrader l'énergie des neutrons émis par la source jusqu'à obtenir des neutrons thermiques.

Le spectre bidimensionnel des résultats de détection pour cette source est représenté à la figure 3a. Une analyse par forme d'impulsion (PSD) permet de faire émerger deux zones de regroupement 100 et 110 : la zone 100 qui comprend le lobe du bas du spectre regroupe les impulsions issues des interactions avec les rayons gamma, et la zone 110 qui se situe au-dessus de la zone 100 regroupe les impulsions issues des interactions avec les neutrons.

Les interactions du détecteur avec des neutrons thermiques peuvent être discriminées de celles avec des neutrons rapides en séparant la zone 110 en deux sous-zones (non représentées), une sous-zone comportant le lobe s'étendant en largeur pour les neutrons rapides et une sous-zone comportant l'ovale au-dessus de ce lobe pour les neutrons thermiques.

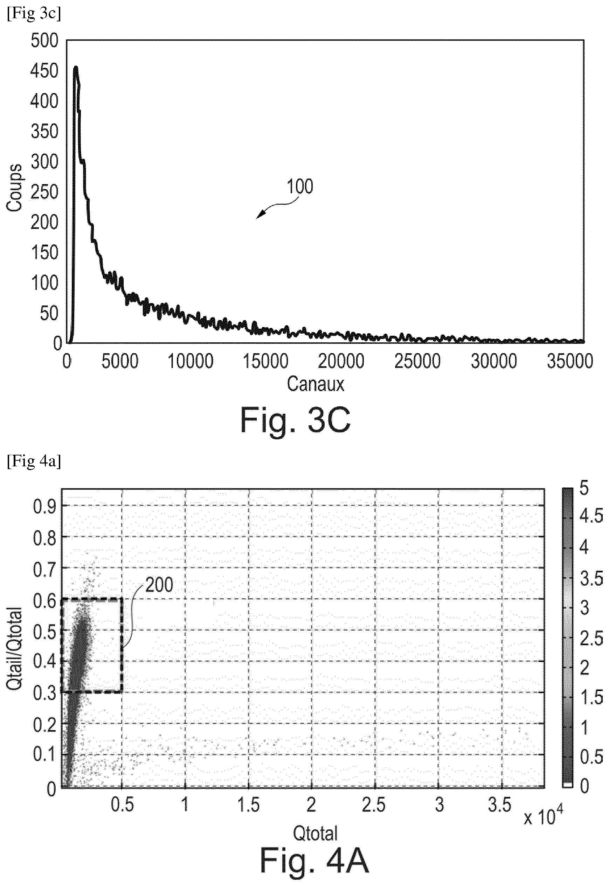

Ces zones ainsi définies permettent d'isoler les coups issus de chaque nature de rayonnement. On peut alors obtenir le spectre d'énergie pour chaque nature de rayonnement, comme illustré aux figures 3b et 3c pour les neutrons et les rayons gamma, respectivement.

Ces graphes sont obtenus par projection de la zone d'intérêt du spectre bidimensionnel sur l'axe des abscisses: l'abscisse sur les graphes des figures 3B et 3C représente les canaux de l'histogramme en énergie, c'est-à-dire la charge totale Qₜₒₜ, et l'ordonnée le nombre de coups comptés pour chaque valeur de charge totale.

Le spectre d'énergie des neutrons représenté à la figure 3b présente un étalement de type exponentiel E1 et un pic P1, E1 s'étendant entre 0 et 35000 canaux et P1 entre 5000 et 10000 canaux, correspondant aux interactions des neutrons rapides et des neutrons thermiques avec le scintillateur 10, respectivement.

Similairement à ce qui vient d'être décrit, le détecteur 1 est soumis à une source bêta de carbone-14, placée au contact de la structure active 2. Le dépôt d'énergie est réalisé dans les scintillateurs 10, 20 et 30.

Seules les impulsions reçues par les scintillateurs 20 et 30 sont comptabilisées, et représentées sur le spectre bidimensionnel de la figure 4a, ce qui permet de définir une zone d'intérêt 200 regroupant les impulsions issues des interactions du détecteur avec le rayonnement bêta.

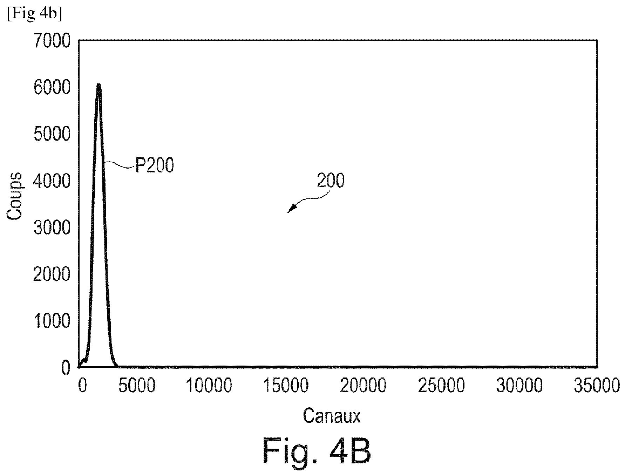

Le spectre d'énergie bêta correspondant est représenté à la figure 4b. Il présente un pic distinctif P200 entre 0 et 5000 canaux.

Le détecteur 1 est soumis à une source alpha/gamma de plutonium-239, placée au contact de la structure active 2 du côté de la face d'entrée 2a. Le dépôt d'énergie des interactions alpha est réalisé dans le scintillateur 30, et celui des interactions gamma dans le scintillateur 10.

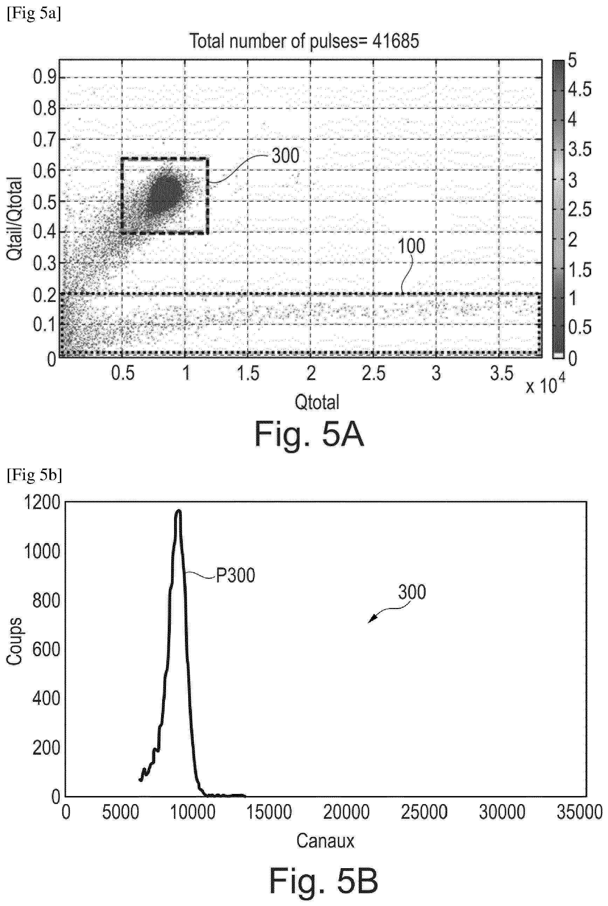

Les impulsions reçues par le scintillateur 30 sont comptabilisées et une zone d'intérêt 300 regroupant les impulsions issues des interactions alpha est définie sur le spectre bidimensionnel, comme illustré à la figure 5a. Les impulsions issues des interactions gamma avec le scintillateur 10 sont regroupées dans la zone 100 définie plus haut.

Le spectre d'énergie du rayonnement alpha est représenté à la figure 5b. Il présente un pic distinctif P300 entre 5000 et 12000 canaux.

Les zones de regroupement par nature de rayonnement sont résumées dans le tableau 1 ci-dessous.

**Tableau 1**

| | Abscisse (Qₜₒₜ) | Ordonnée (Qₜₐᵢₗ/Qₜₒₜ) |
|---|---|---|
| Alpha - Zone 300 | 5000-12000 | 0,4-0,62 |
| Bêta - Zone 200 | 0-5000 | 0,3-0,6 |
| Neutrons - Zone 110 | 0-35000 | 0,19-0,33 |
| Gamma - Zone 100 | 0-35000 | 0-0,1875 |

Comme mentionné précédemment, ces zones ainsi définies permettent de discriminer différentes natures de rayonnement détectées simultanément par le détecteur 1.

A titre d'exemple, le détecteur 1 est soumis simultanément à deux sources de rayonnement ionisant, à savoir une source de californium-252 et une source de plutonium-239.

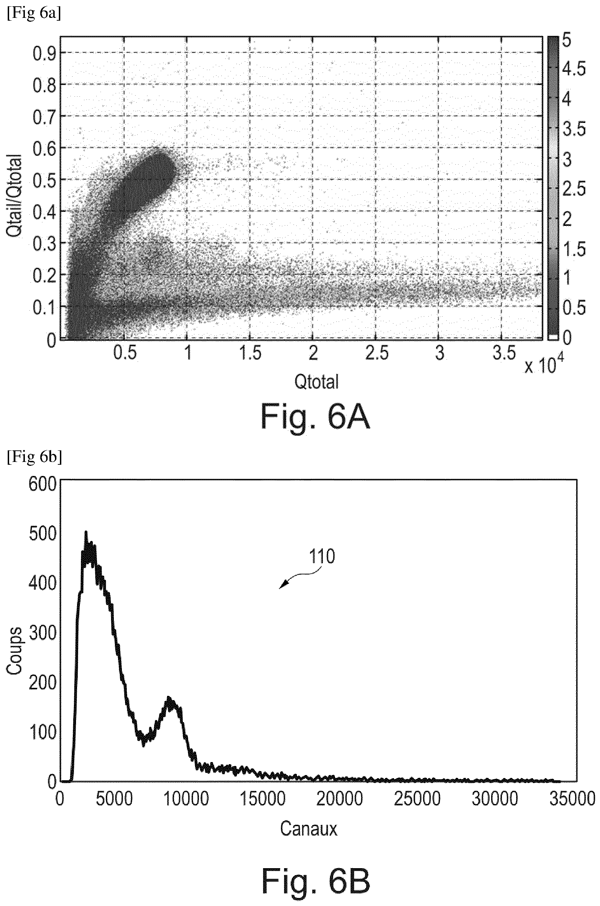

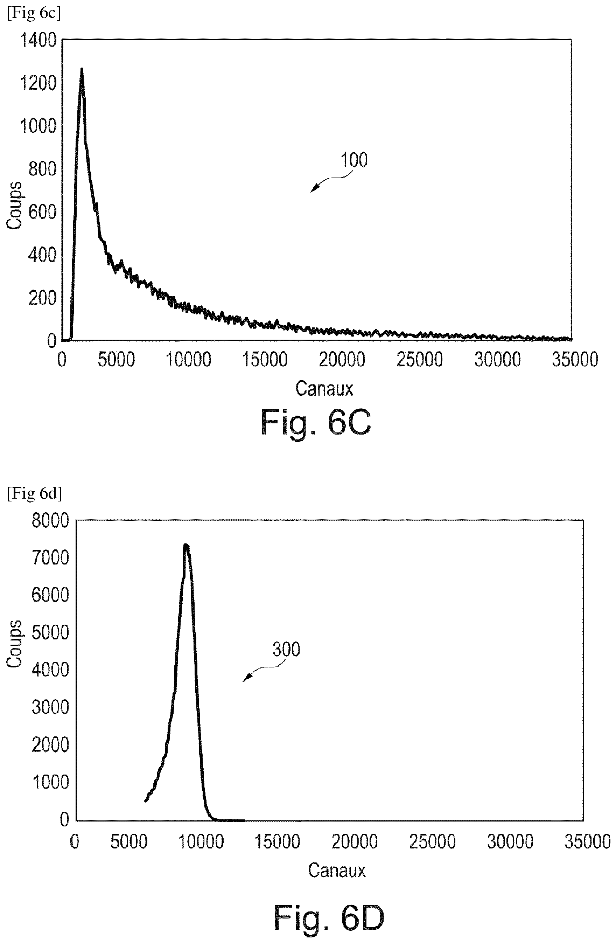

Les résultats de détection sont illustrés aux figures 6a à 6d. Comme le montrent ces figures, le détecteur 1 présente une aptitude à discriminer les neutrons (figure 6b), des rayonnements gamma (figure 6c) et alpha (figure 6d).

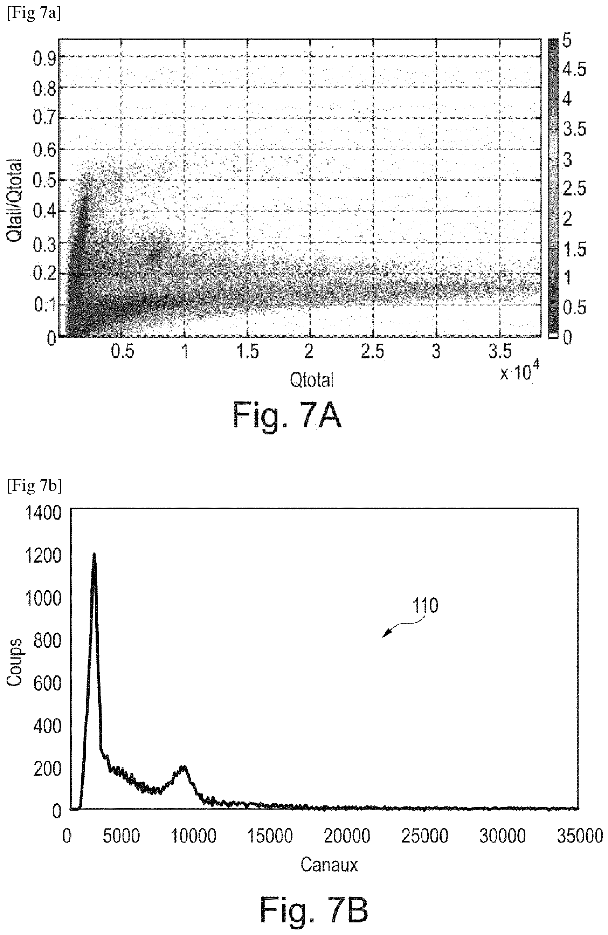

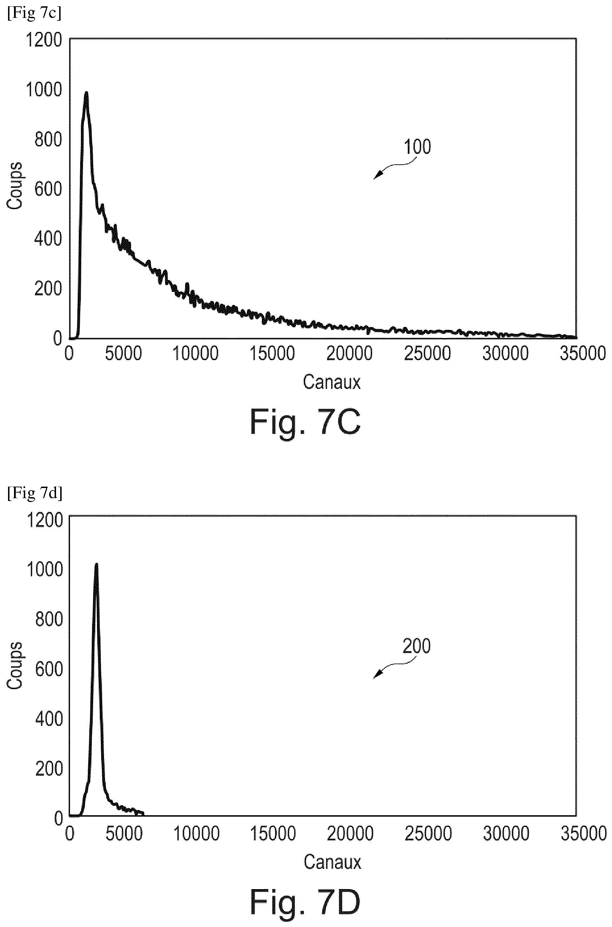

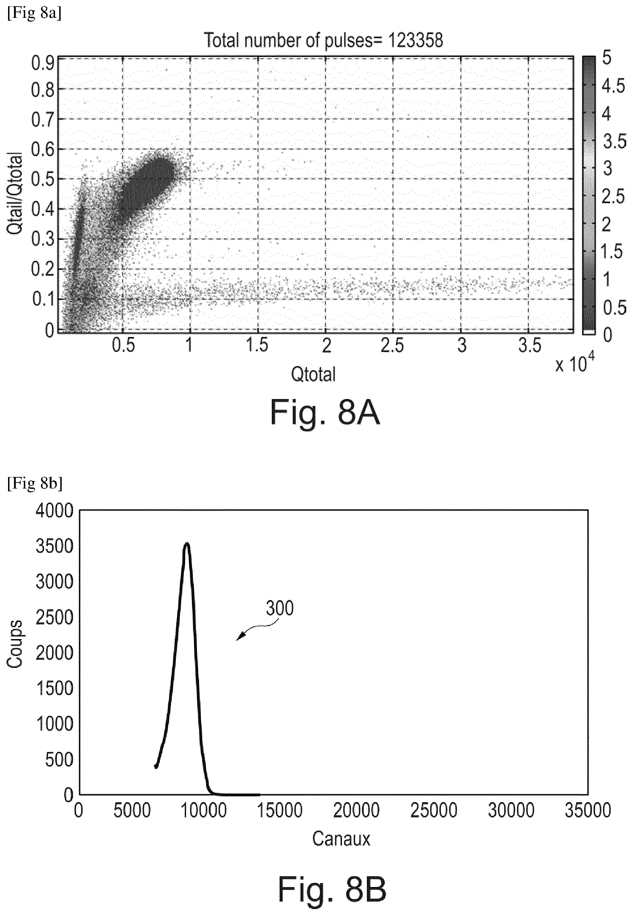

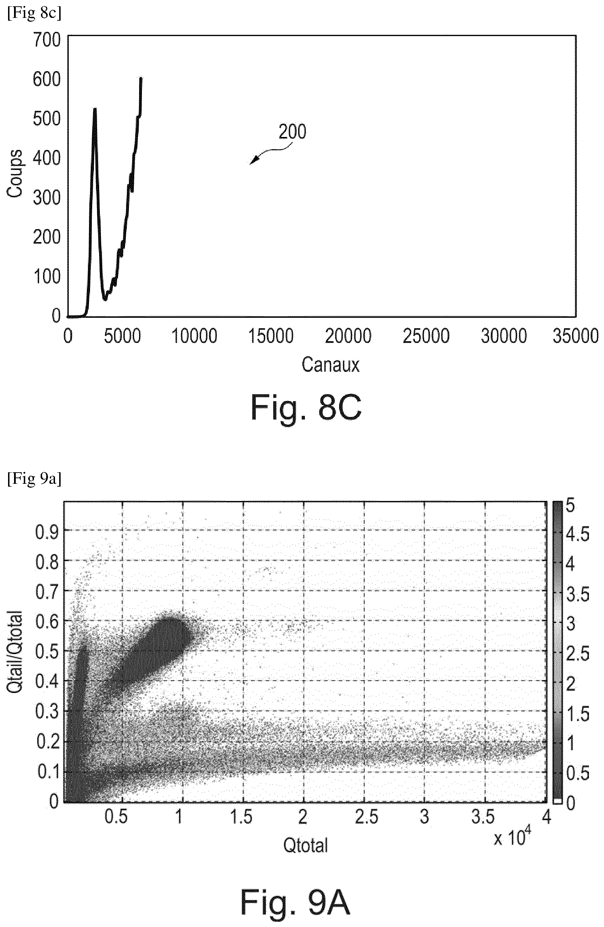

Dans l'exemple illustré aux figures 7a à 7d, le détecteur 1 est soumis simultanément une source de californium-252 et une source de carbone-14, et présente une aptitude à discriminer les neutrons (figure 7b), des rayonnements gamma (figure 7c) et bêta (figure 7d). Dans l'exemple illustré aux figures 8a à 8c, le détecteur 1 est soumis simultanément une source de californium-252 et une source de plutonium-239, et présente une aptitude à discriminer un rayonnement alpha (figure 8b) d'un rayonnement bêta (figure 8c).

Enfin, dans l'exemple illustré aux figures 9a à 9e, le détecteur 1 est soumis simultanément aux trois sources de rayonnement ionisant précitées, à savoir une source de californium-252, une source de carbone-14 et une source de plutonium-239.

Le spectre bidimensionnel représenté à la figure 9a présente des regroupements d'impulsions dans les quatre zones définies plus haut, ce qui signifie que le détecteur 1 a détecté des rayonnements ionisants de type alpha, bêta, gamma et neutrons.

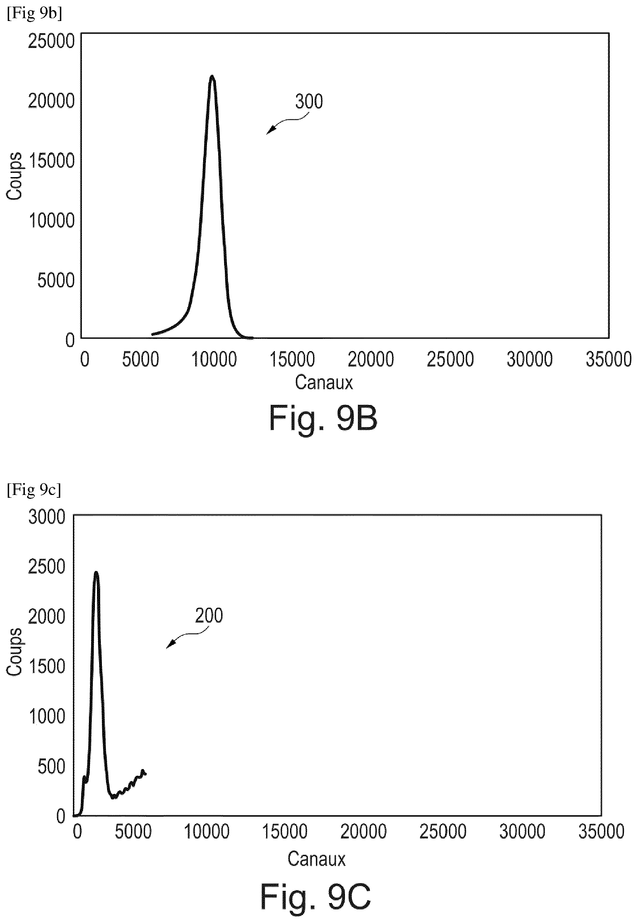

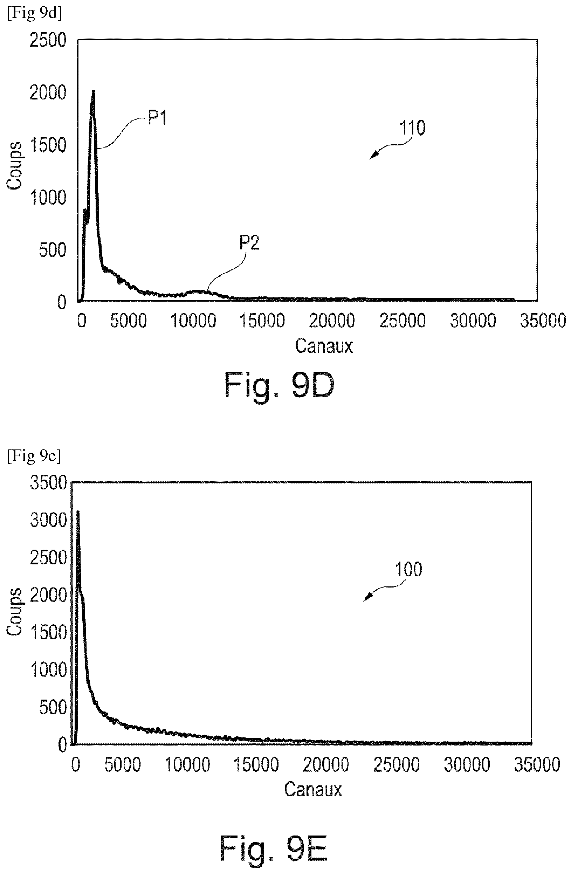

Le détecteur 1 présente ainsi une aptitude à une quintuple discrimination, c'est-à-dire qu'il peut discriminer les neutrons rapides et thermiques (pics P1 et P2 de la figure 9d, respectivement), des rayonnements alpha (figure 9b), beta (figure 9c) et gamma (figure 9e).

### Exemple 2

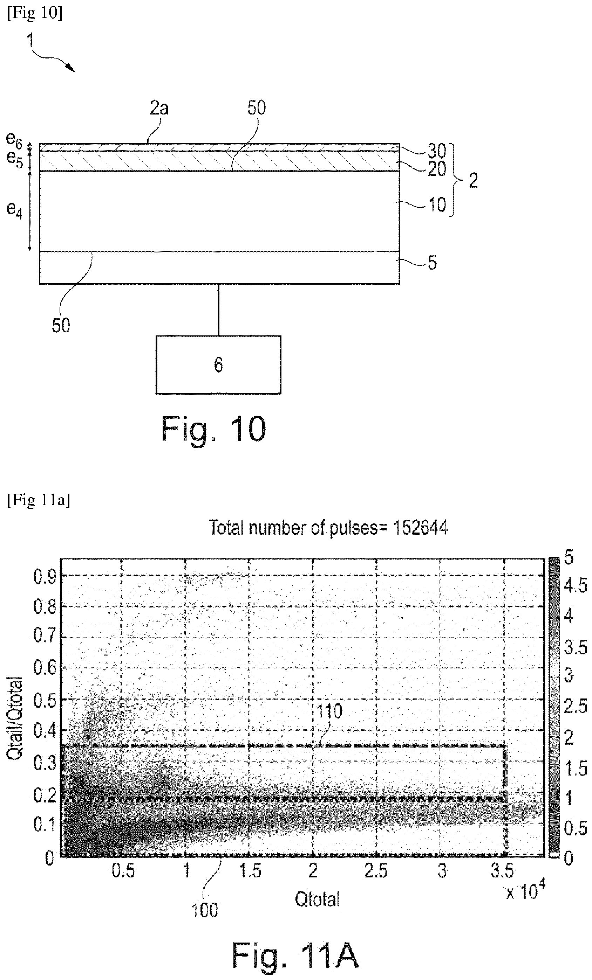

On a illustré à la figure 10 une variante de réalisation d'un détecteur 1 qui n'est pas selon l'invention telle que revendiquée.

Dans cette variante, le détecteur comporte deux scintillateurs plastiques 10, 20, et un scintillateur inorganique 30.

Dans l'exemple considéré, les scintillateurs plastiques 10 et 20 sont préparés suivant une méthode similaire à celle qui vient d'être décrite.

Le scintillateur plastique 10 détecte préférentiellement les neutrons et les rayons gamma, et présente une épaisseur e₄ d'environ 7000 µm, une constante de décroissance moyenne de photoluminescence τ₄ d'environ 3,3 ns, et un indice de réfraction d'environ 1,58.

Le scintillateur plastique 20 détecte préférentiellement les rayonnements bêta, présente une épaisseur e₅ d'environ 153 µm, une constante de décroissance moyenne de photoluminescence τ₄ d'environ 47 ns, et un indice de réfraction d'environ 1,60.

Pour préparer le scintillateur inorganique 30, on disperse un mélange de sulfure de zinc dopé argent (ZnS:Ag) et de polystyrène dans du toluène, le mélange étant par exemple de 80 %m de ZnS:Ag et 20 %m de polystyrène, %m désignant ici le pourcentage massique.

Le mélange est ensuite versé et étalé en couche mince directement sur le scintillateur 20, par exemple au moyen d'un dispositif de type *doctor blade,* avant d'être laissé sous ventilation pendant une durée d'environ deux heures pour l'évaporation du toluène.

La préparation de ZnS:Ag est par exemple obtenue à partir d'une poudre fluorescente commerciale dont la taille des particules est d'environ 8 µm.

Le scintillateur 30 ainsi obtenu présente une épaisseur e₆ d'environ 43 µm, une constante de décroissance moyenne de photoluminescence τ₆ d'environ 200 ns.

Comme décrit précédemment, le scintillateur 10 est relié aux scintillateurs 20 et 30 au moyen d'un liant optique 50, par exemple une graisse ou un ciment optique.

Dans l'exemple considéré, les scintillateurs 10, 20 et 30 présentent un spectre d'émission dont le maximum est à une longueur d'onde de 425 nm pour le scintillateur 10, et 435 nm pour le scintillateur 20, et 450 nm pour le scintillateur 30.

Le détecteur 1 ainsi obtenu est d'abord soumis à une source de rayonnement à la fois, comme cela a été décrit plus haut, afin de déterminer les zones de regroupement permettant d'isoler les impulsions issues de chaque nature de rayonnement.

Le détecteur 1 est soumis à une source de californium-252 partiellement thermalisée émettant conjointement des neutrons rapides et thermiques, et des rayons gamma.

Le dépôt d'énergie est réalisé dans le scintillateur 10 et deux zones d'intérêt 100 et 110 sont déterminées sur le spectre bidimensionnel représenté à la figure 11a, regroupant respectivement les impulsions issues des interactions gamma et neutrons.

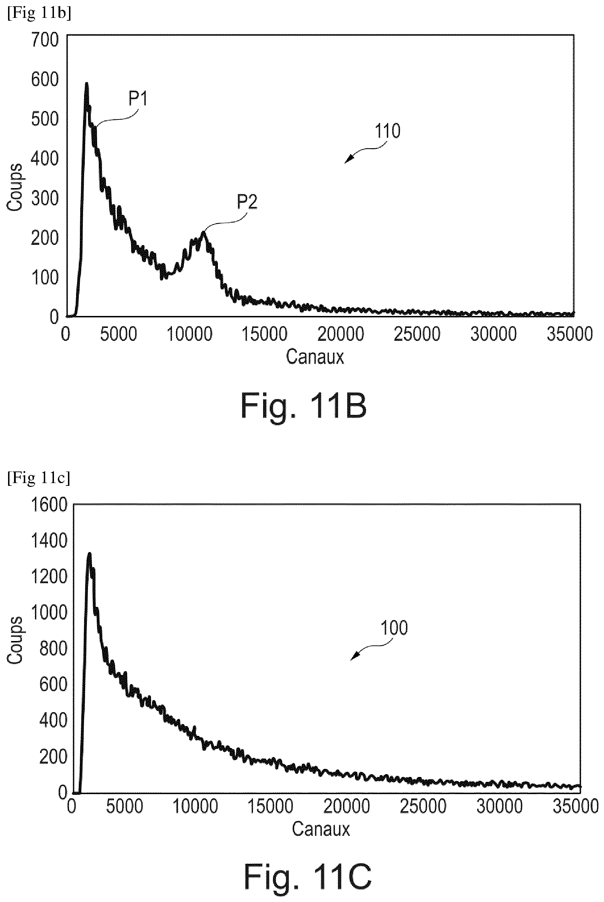

L'analyse par forme d'impulsion permet ainsi de discriminer les neutrons des rayons gamma, comme le montrent les figures 11b et 11c.

Le spectre d'énergie des neutrons de la figure 11b présente un étalement exponentiel P1 et un pic P2 correspondant aux neutrons rapides et thermiques, respectivement.

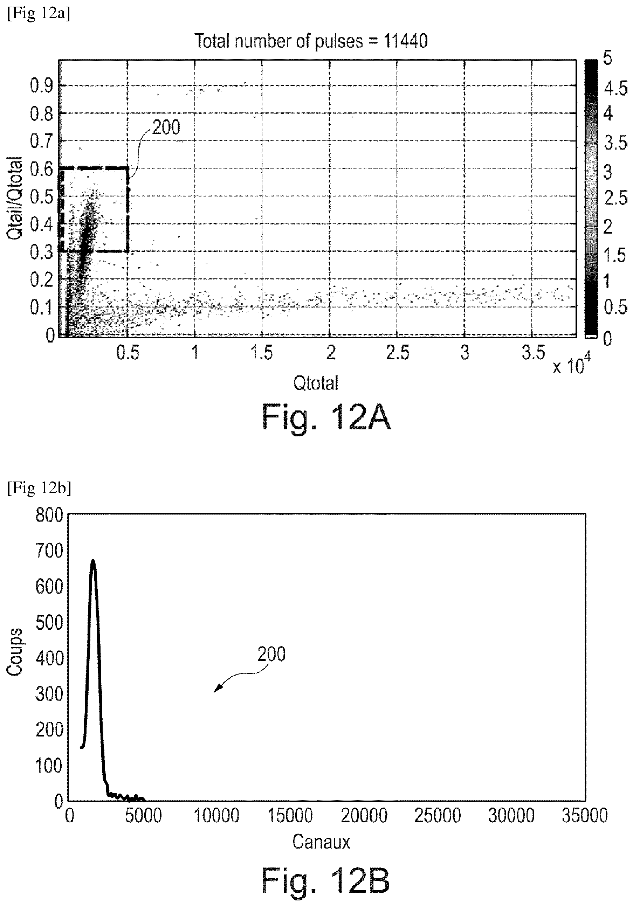

De même, le détecteur 1 est soumis à une source bêta de carbone-14 et on détermine la zone d'intérêt 200 regroupant les impulsions issues des interactions bêta avec le scintillateur 20, comme illustré sur le spectre bidimensionnel représenté à la figure 12a et le spectre d'énergie bêta associé représenté à la figure 12b.

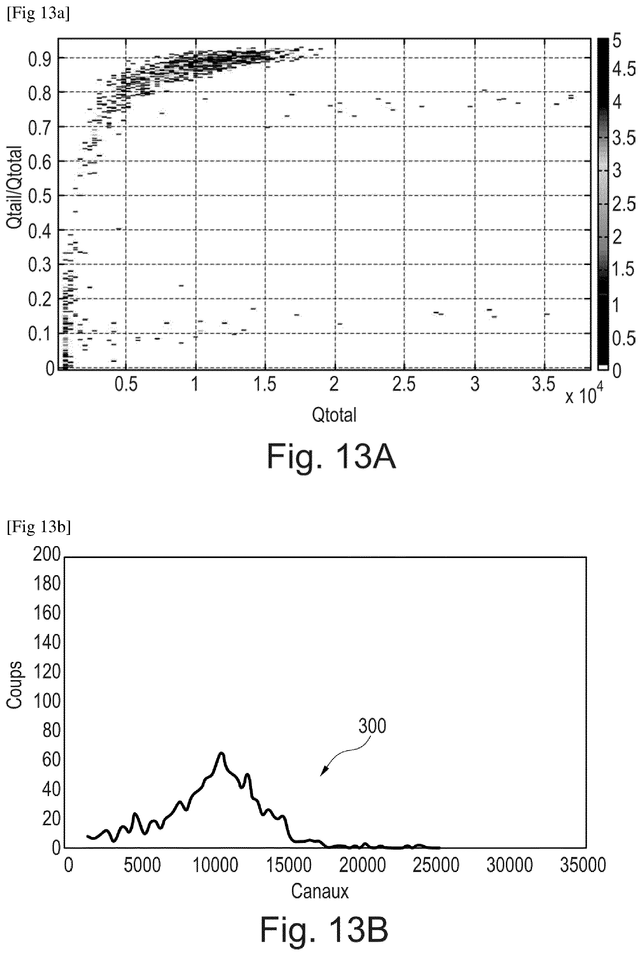

Le détecteur 1 est aussi soumis à une source alpha de plutonium-239, pour laquelle le dépôt d'énergie est réalisé dans le scintillateur inorganique 30, ce qui permet de définir la zone d'intérêt 300 regroupant les impulsions issues des interactions alpha avec ce scintillateur, comme illustré sur le spectre bidimensionnel représenté à la figure 13a et le spectre d'énergie alpha associé illustré à la figure 13b.

Les zones de regroupement par nature de rayonnement sont résumées pour cette exemple de réalisation de détecteur dans le tableau 2 ci-dessous.

**Tableau 2**

| | Abscisse (Qₜₒₜ) | Ordonnée (Qₜₐᵢₗ/Qₜₒₜ) |
|---|---|---|
| Alpha - Zone 300 | 0-25000 | 0,8-1,0 |
| Bêta - Zone 200 | 0-5000 | 0,3-0,6 |
| Neutrons - Zone 110 | 0-35000 | 0,19-0,33 |
| Gamma - Zone 100 | 0-35000 | 0-0,1875 |

Similairement à ce qui a été décrit précédemment, le détecteur ainsi réalisé peut discriminer plusieurs natures de rayonnement, notamment lorsqu'il est irradié simultanément par plusieurs sources de rayonnement.

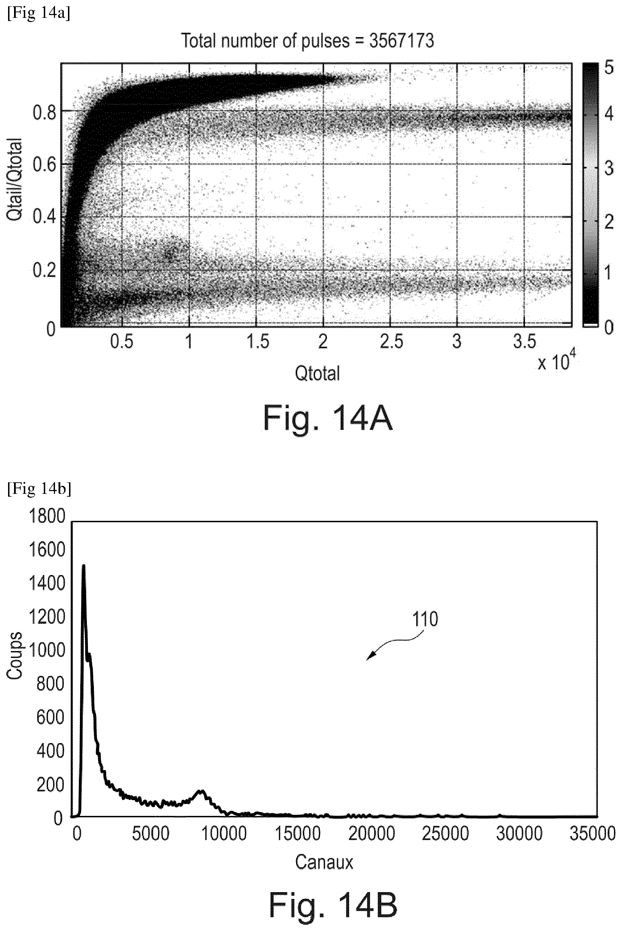

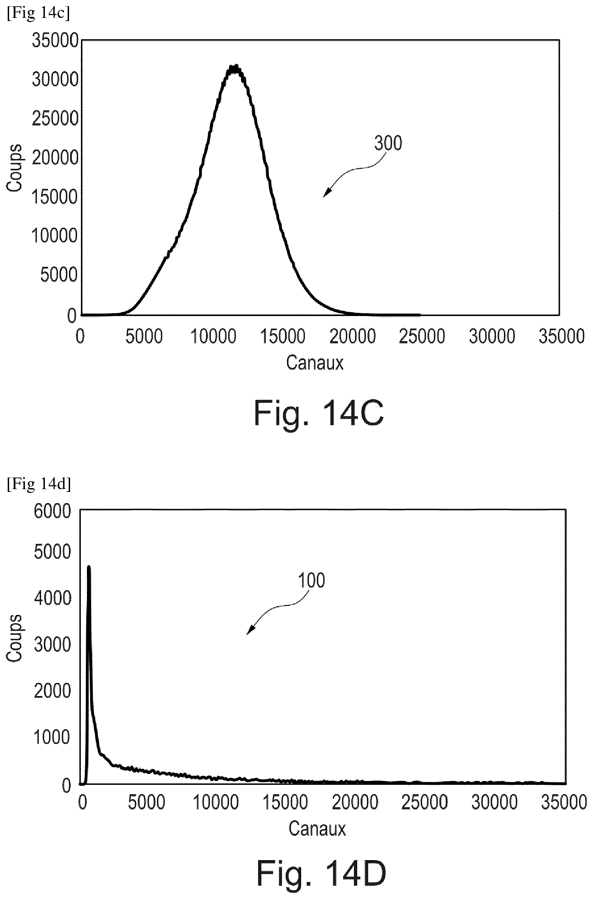

Par exemple, lorsqu'on soumet le détecteur 1 à une source de curium-244 et une source de californium-252, on peut discriminer à partir du spectre dimensionnel illustré à la figure 14a les neutrons (figure 14b), des rayonnements alpha (figure 14c) et gamma (figure 14d).

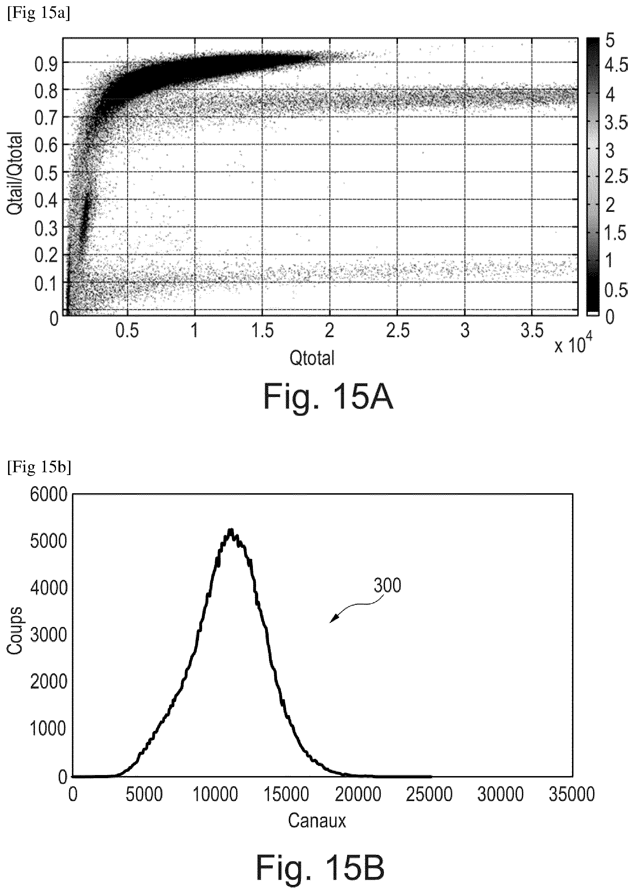

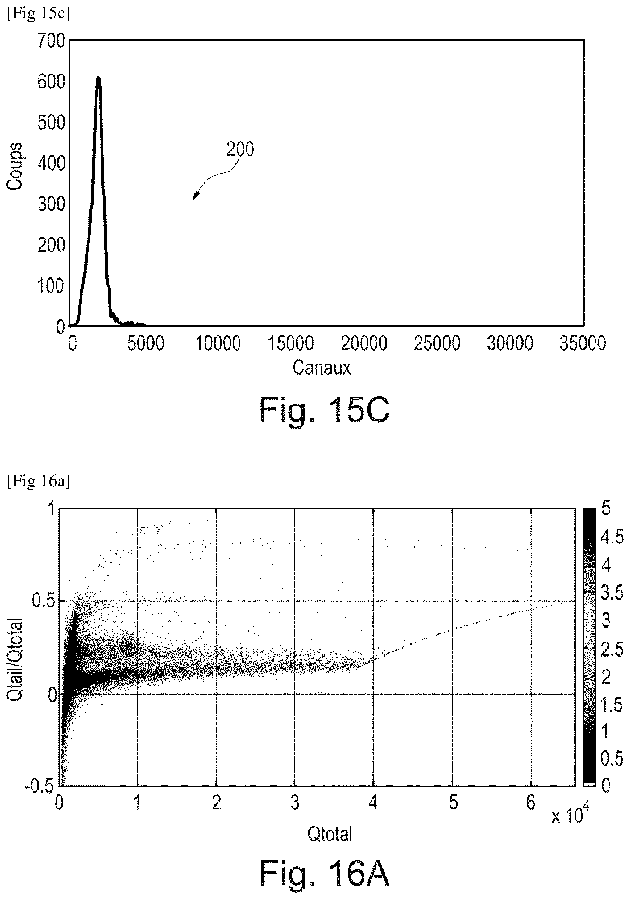

Dans un autre exemple illustré aux figures 15a à 15c, le détecteur 1 est soumis simultanément une source de de curium-244 et une source de carbone-14, et présente une aptitude à discriminer un rayonnement alpha (figure 15b) d'un rayonnement beta (figure 15c).

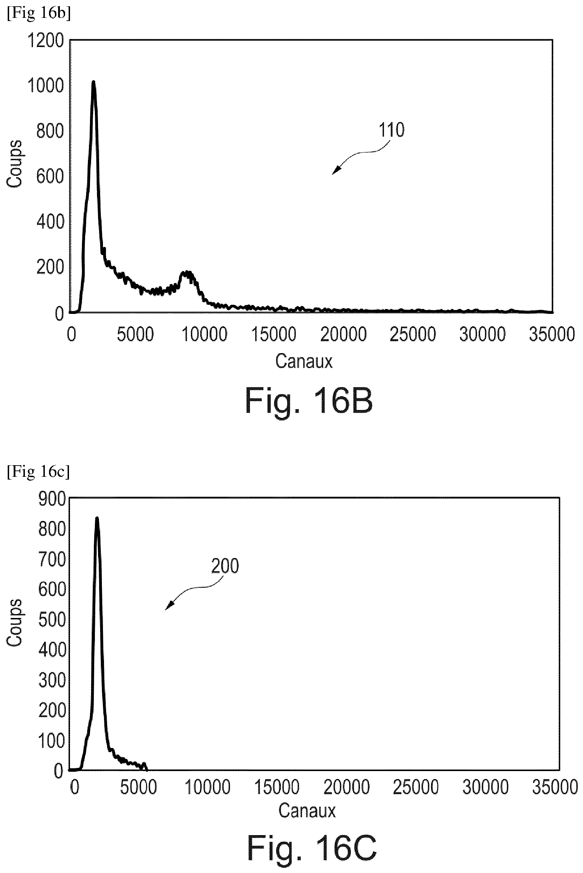

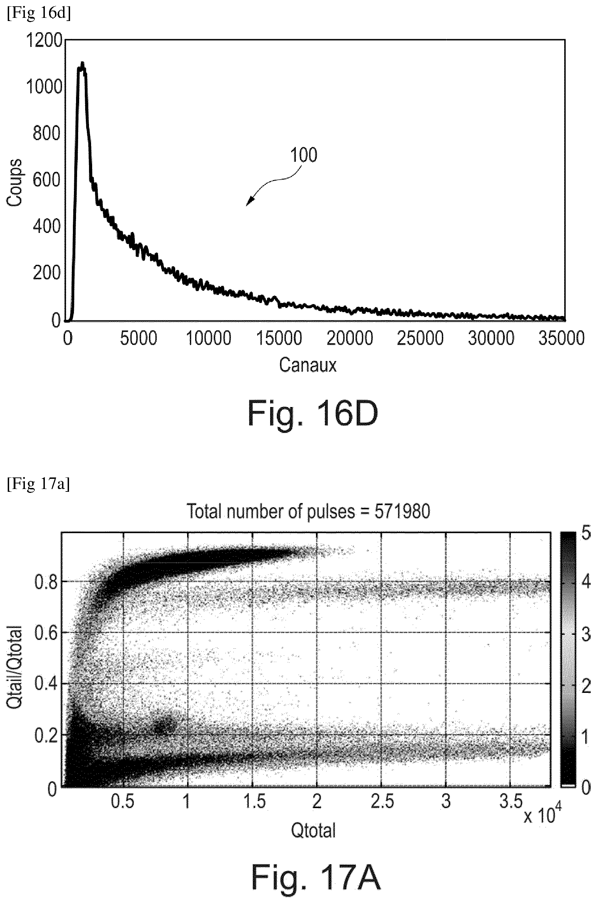

Dans l'exemple illustré aux figures 16a à 16d, le détecteur 1 est soumis simultanément une source de californium-252 et une source de carbone-14, et présente une aptitude à discriminer les neutrons (figure 16b), des rayonnements beta (figure 16c) et gamma (figure 16d).

Enfin, dans l'exemple illustré aux figures 17a à 17e, le détecteur 1 est soumis simultanément aux trois sources de rayonnement ionisant, à savoir une source de californium-252 partiellement thermalisé, une source de carbone-14 et une source de plutonium-239.

Le spectre bidimensionnel représenté à la figure 17a présente des regroupements d'impulsions dans les quatre zones définies plus haut, ce qui signifie que le détecteur 1 a détecté des rayonnements ionisants de type alpha, beta, gamma et neutrons.

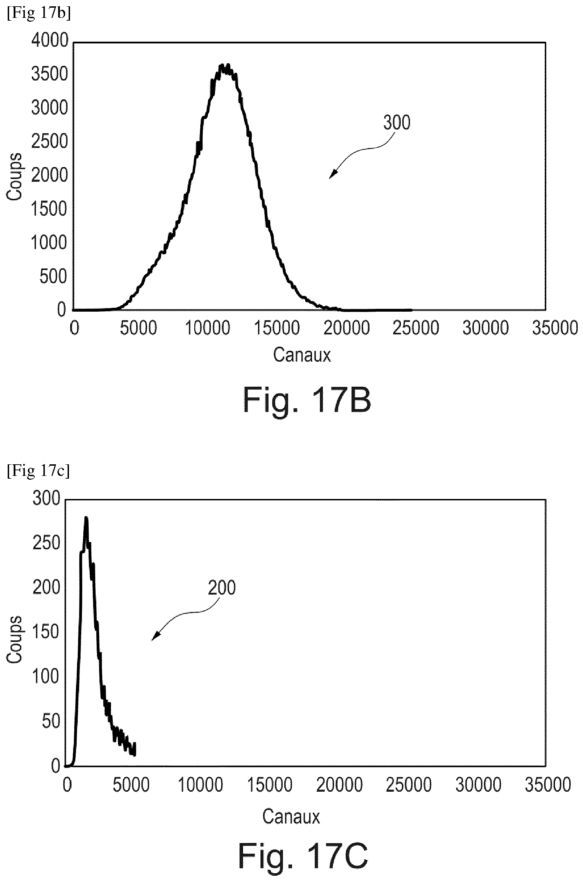

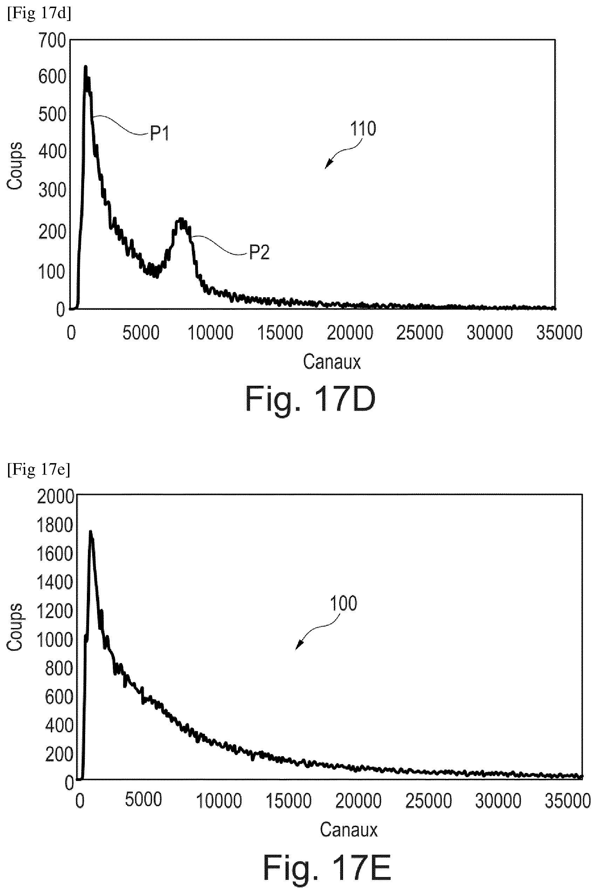

Le détecteur 1 présente ainsi une aptitude à une quintuple discrimination, c'est-à-dire qu'il peut discriminer les neutrons rapides et thermiques (étalement exponentiel P1 et pic P2 de la figure 17d, respectivement), des rayonnements alpha (figure 17b), beta (figure 17c) et gamma (figure 17e).

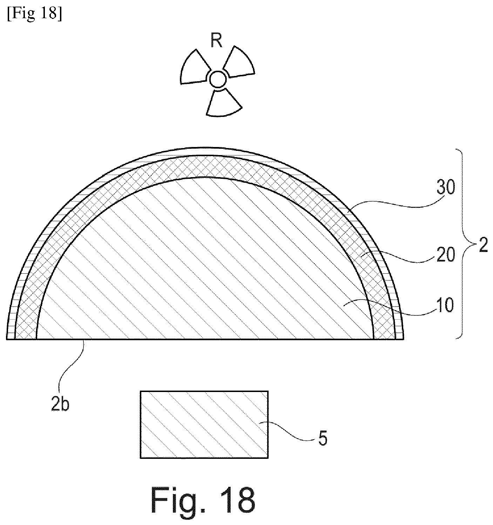

D'autres agencements des différents scintillateurs sont possibles. La structure active peut présenter une forme de demi-sphère tel qu'illustré à la figure 18, ou autres formes convexes, le scintillateur le plus fin étant disposé sur l'extérieur de la structure, et le scintillateur le plus épais en son cœur.

La structure active 2 peut encore comporter un scintillateur inorganique 60 capable de faire une spectrométrie gamma des éventuels rayonnements gamma incidents.

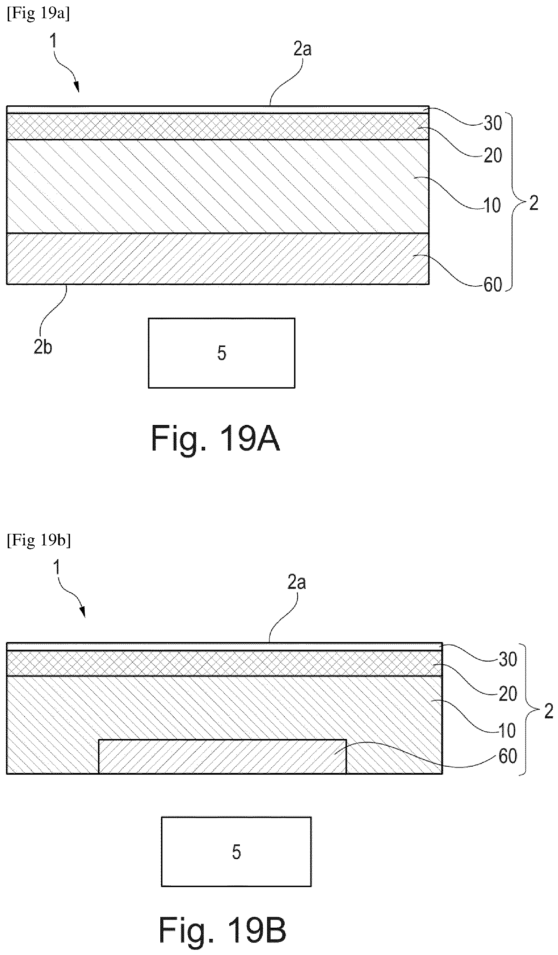

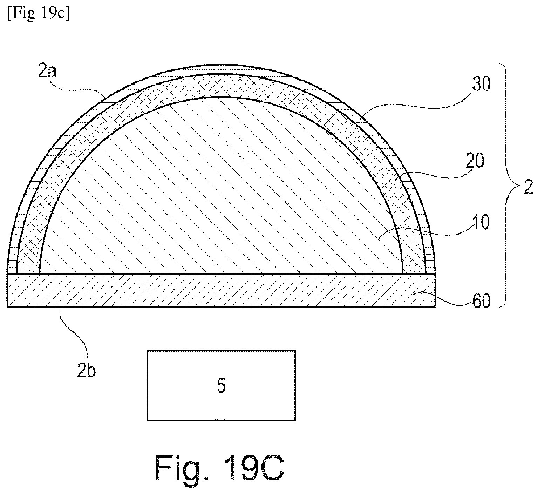

Le scintillateur inorganique 60 peut être disposé au contact, notamment derrière ou à coté, du premier scintillateur 10, comme illustré à la figure 19a pour une structure active 2 parallélépipédique, et à la figure 19b pour une structure active 2 hémisphérique.

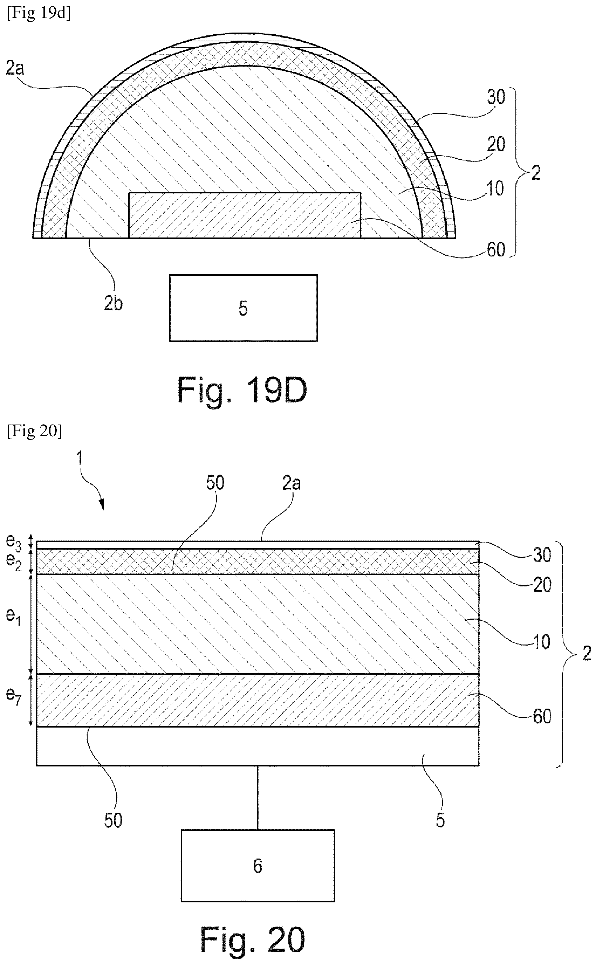

Le scintillateur inorganique 50 peut encore être intégré dans le premier scintillateur 10 comme illustré à la figure 19b et à la figure 19d.

### Exemple 3

On a illustré à la figure 20 un exemple de réalisation d'un détecteur 1 comportant un tel scintillateur inorganique 60.

Le détecteur 1 comporte par exemple trois scintillateurs organiques 10, 20 et 30, par exemple identiques à ceux du premier exemple de réalisation décrit plus haut et illustré à la figure 2. Le scintillateur inorganique 60 est disposé derrière le premier scintillateur organique 10.

Il est par exemple de type BGO et présente une épaisseur e₇ d'environ 3 cm.

Comme décrit précédemment, le détecteur comporte en outre un photomultiplicateur 5 disposé à l'arrière de la structure active 2, par exemple relié au scintillateur inorganique 60 au moyen d'un liant optique 50.

Le détecteur 1 ainsi obtenu est soumis simultanément à trois sources de rayonnements ionisants, à savoir une source de californium-252, une source de carbone-14 et une source de plutonium-239.

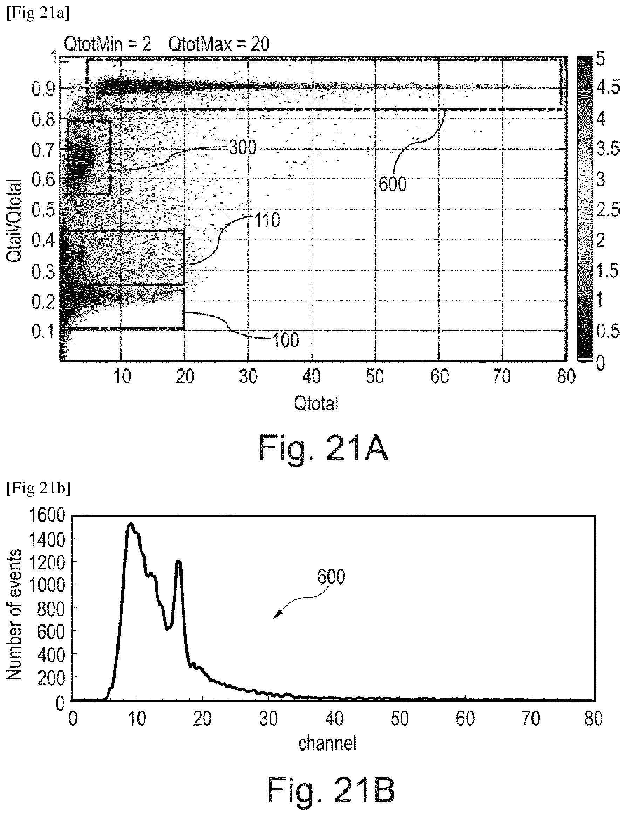

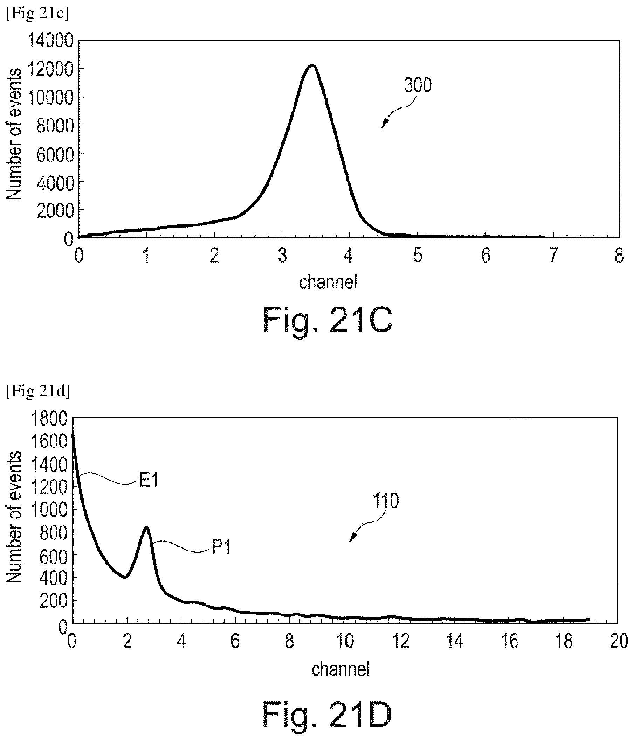

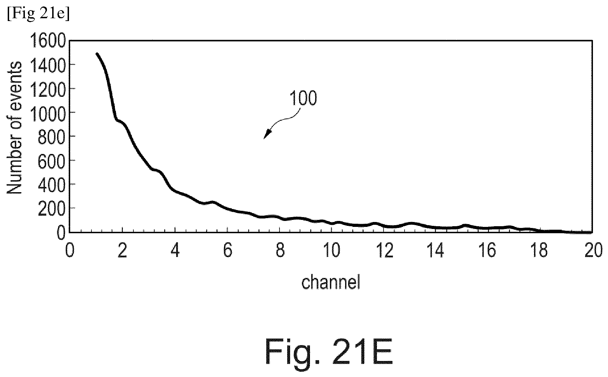

Le spectre bidimensionnel représenté à la figure 21a présente des regroupements d'impulsions dans des zones 300, 100, 110 correspondant à la détection des rayonnements ionisants de type alpha (figure 21c), gamma (figure 21e) et neutrons (figure 21d), respectivement.

Les rayonnements gamma dont les impulsions apparaissent dans la zone 100 proviennent des interactions avec le scintillateur plastique 10.

On peut définir une nouvelle zone 600 qui correspond aux interactions des rayonnements gamma avec le scintillateur inorganique 60, ce qui permet d'obtenir le spectre d'énergie de la figure 21b.

Ce spectre présente un profil caractéristique qui permet de déterminer la ou les valeurs d'énergie d'émission des rayonnements gamma détectés, et ainsi d'identifier la ou les sources de radiation.

Bien entendu, l'invention n'est pas limitée aux exemples qui viennent d'être décrits.

Par exemple, d'autres sources radioactives que celles testées peuvent être utilisées pour définir les zones d'intérêt précitées.

La préparation combinée des scintillateurs 20 et 30 l'un sur l'autre peut se faire par d'autres méthodes que par l'utilisation d'un dispositif *doctor blade,* notamment suivant le procédé de couplage dit « autogène » décrit dans la demande FR2983310.

D'autres molécules peuvent être utilisées pour le scintillateur 10 comme éléments fluorescents ; l'homme du métier saura adapter la formulation de ce scintillateur selon son besoin.

## Revendications

1. Détecteur de rayonnement (1) comportant une structure active (2) présentant une face d'entrée (2a) et une face de sortie (2b) d'un rayonnement ionisant incident (R), la structure active comportant :
∘ Un premier scintillateur organique (10) comportant au moins un matériau neutrophage et permettant une discrimination entre neutrons rapides, neutrons thermiques et photons,
∘ au moins un deuxième scintillateur (20) disposé devant le premier et capable de détecter préférentiellement les rayonnements alpha et/ou béta, les scintillateurs présentant de par le choix de leurs constituants des constantes de décroissance moyenne de photoluminescence différentes et le deuxième (20) ayant une épaisseur (e₂ ; e₅) plus faible que le premier (e₁ ; e₄),
la structure active (2) comportant au moins un troisième scintillateur (30) disposé devant le deuxième (20), le troisième scintillateur détectant préférentiellement les rayonnements alpha,
le détecteur de rayonnement (1) étant **caractérisé en ce que** l'ensemble des scintillateurs du détecteur est de type scintillateur plastique, la différence entre les indices de réfraction de deux scintillateurs adjacents étant d'au plus 0,5.

2. Détecteur selon la revendication 1 , comportant un convertisseur photon-électron à gain (5), notamment un tube photomultiplicateur (PMT) ou un photomultiplicateur en silicium (SiPM), disposé derrière la face de sortie (2b) de la structure active pour collecter la lumière émise au sein des différents scintillateurs (10, 20, 30).

3. Détecteur selon l'une quelconque des revendications précédentes, les scintillateurs (10, 20, 30) ayant une épaisseur croissante en progressant de l'entrée vers la sortie.

4. Détecteur selon l'une quelconque des revendications précédentes, le premier scintillateur (10) ayant une épaisseur (e_{1 ;} e₄) comprise entre 3 et 100 mm, de préférence entre 5 et 10 mm.

5. Détecteur selon l'une quelconque des revendications précédentes, le deuxième scintillateur (20) détectant préférentiellement les rayonnements béta et ayant une épaisseur (e_{2 ;} e₅) comprise entre 50 et 250 microns, de préférence entre 100 et 250 microns, de préférence égale à 150 microns.

6. Détecteur selon l'une quelconque des revendications précédentes, le troisième scintillateur détectant préférentiellement les rayonnements alpha (30) ayant une épaisseur (e_{3 ;} e₆) comprise entre 1 et 50 microns, mieux entre 10 et 20 microns.

7. Détecteur selon l'une quelconque des revendications précédentes, les scintillateurs (10, 20, 30) présentant une valeur de constante de décroissance moyenne de photoluminescence décroissante en progressant de l'entrée vers la sortie.

8. Détecteur selon l'une quelconque des revendications précédentes, la différence entre les valeurs des constantes de décroissance moyenne de deux scintillateurs adjacents étant comprise entre 25 et 250ns, mieux entre 30 et 250 ns.

9. Détecteur selon l'une quelconque des revendications précédentes, la constante de décroissance moyenne (τ_{1,} τ₄) du premier scintillateur (10) étant comprise entre 1 et 20ns, notamment de l'ordre de 10 ns.

10. Détecteur selon l'une quelconque des revendications précédentes, le premier scintillateur (10) ayant un spectre d'émission dont le maximum est à une longueur d'onde comprise entre 400 et 630 nm, en particulier d'environ 425 nm.

11. Détecteur selon l'une quelconque des revendications précédentes, le premier scintillateur (10) étant un scintillateur plastique comportant :
- au moins un élément fluorescent primaire,
- de préférence, un au moins élément fluorescent secondaire, et
- au moins un élément neutrophage.

12. Détecteur selon la revendication précédente, ledit élément fluorescent primaire étant choisi parmi le biphényle, le *méta*-terphényle, ou le 2,5-diphényloxazole, et l'élément neutrophage comportant du lithium, du bore, cadmium, ou encore du gadolinium.

13. Détecteur selon l'une quelconque des revendications 1 à 12, la structure active (2) comportant un scintillateur inorganique (60) capable d'effectuer une spectrométrie gamma, ledit scintillateur étant de préférence du côté de la face de sortie (2c) de la structure active (2).

14. Détecteur selon l'une quelconque des revendications précédentes, la différence entre les indices de réfraction de deux scintillateurs adjacents étant d'au plus 0,05.

15. Procédé pour la détection et la discrimination de rayonnements ionisants en utilisant un détecteur (1) selon l'une quelconque des revendications 1 à 14 et dont la face d'entrée (2a) est exposée à une source de rayonnement (R), procédé comportant l'étape consistant à :
∘ Analyser, à partir au moins de la connaissance des constantes de décroissance moyenne des scintillateurs, le signal optique généré par la structure active afin de discriminer la nature du rayonnement parmi au moins 4 types de rayonnements différents, de préférence au moins 5.

16. Procédé selon la revendication précédente, la discrimination entre les différents rayonnements s'effectuant grâce à une méthode de discrimination par forme d'impulsion (PSD).

17. Procédé selon l'une des revendications 15 ou 16, le signal optique généré par la structure active (2) étant collecté par un convertisseur photon-électron à gain (5), notamment un tube photomultiplicateur (PMT) ou un photomultiplicateur en silicium (SiPM), afin d'être converti en impulsion électrique.

18. Procédé selon l'une des revendications 15 à 17 mettant en œuvre le détecteur selon la revendication 13, la composante gamma, lorsqu'elle est détectée, étant analysée de manière spectrométrique.

## Patentansprüche

1. Strahlungsdetektor (1), der eine aktive Struktur (2) umfasst, die eine Eintrittsfläche (2a) und eine Austrittsfläche (2b) einer einfallenden ionisierenden Strahlung (R) aufweist, wobei die aktive Struktur Folgendes umfasst:
∘ einen ersten organischen Szintillator (10), der mindestens ein neutronenabsorbierendes Material umfasst und eine Diskriminierung zwischen schnellen Neutronen, thermischen Neutronen und Photonen ermöglicht,
∘ mindestens einen zweiten Szintillator (20), der vor dem ersten angeordnet ist und dazu fähig ist, vorzugsweise Alpha- und/oder Betastrahlung zu detektieren,
wobei die Szintillatoren aufgrund der Auswahl ihrer Bestandteile unterschiedliche mittlere Photolumineszenz-Zerfallskonstanten aufweisen und der zweite (20) eine Dicke (e₂; e₅) aufweist, die geringer als diejenige des ersten (e₁; e₄) ist,
die aktive Struktur (2) mindestens einen dritten Szintillator (30) umfasst, der vor dem zweiten (20) angeordnet ist, wobei der dritte Szintillator vorzugsweise Alphastrahlung detektiert,
der Strahlungsdetektor (1) **dadurch gekennzeichnet ist, dass** die Gesamtheit der Szintillatoren des Detektors vom Typ eines Kunststoffszintillators ist, wobei der Unterschied zwischen den Brechungsindizes der beiden benachbarten Szintillatoren höchstens 0,5 beträgt.

2. Detektor nach Anspruch 1, der einen Verstärker-Photonen-Elektronen-Wandler (5), insbesondere eine Fotovervielfacherröhre (PMT) oder einen Silicium-Fotovervielfacher (SiPM) umfasst, der hinter der Austrittsfläche (2b) der aktiven Struktur angeordnet ist, um das in den verschiedenen Szintillatoren (10, 20, 30) emittierte Licht zu erfassen.

3. Detektor nach einem der vorhergehenden Ansprüche, wobei die Szintillatoren (10, 20, 30) eine Dicke aufweisen, die vom Eintritt zum Austritt allmählich zunimmt.

4. Detektor nach einem der vorhergehenden Ansprüche, wobei der erste Szintillator (10) eine Dicke (e₁; e₄) zwischen 3 und 100 mm, vorzugsweise zwischen 5 und 10 mm, aufweist.

5. Detektor nach einem der vorhergehenden Ansprüche, wobei der zweite Szintillator (20) vorzugsweise Betrastrahlung detektiert und eine Dicke (e₂; e₅) zwischen 50 und 250 µm, vorzugsweise zwischen 100 und 250 µm, vorzugsweise gleich 150 µm, aufweist.

6. Detektor nach einem der vorhergehenden Ansprüche, wobei der dritte Szintillator (30) vorzugsweise Alphastrahlung detektiert, wobei er eine Dicke (e₃; e₆) zwischen 1 und 50 µm, noch mehr bevorzugt zwischen 10 und 20 µm, aufweist.

7. Detektor nach einem der vorhergehenden Ansprüche, wobei die Szintillatoren (10, 20, 30) einen Wert der mittleren Photolumineszenz-Zerfallskonstante aufweisen, der vom Eintritt zum Austritt allmählich abnimmt.

8. Detektor nach einem der vorhergehenden Ansprüche, wobei der Unterschied zwischen den Werten der mittleren Zerfallskonstanten von zwei benachbarten Szintillatoren zwischen 25 und 250 ns, noch mehr bevorzugt zwischen 30 und 250 ns, beträgt.

9. Detektor nach einem der vorhergehenden Ansprüche, wobei die mittlere Zerfallskonstante (τ₁, τ₄) des ersten Szintillators (10) zwischen 1 und 20 ns, insbesondere in der Größenordnung von 10 ns, ist.

10. Detektor nach einem der vorhergehenden Ansprüche, wobei der erste Szintillator (10) ein Emissionsspektrum aufweist, dessen Maximum eine Wellenlänge zwischen 400 und 630 nm, insbesondere von etwa 425 nm, ist.

11. Detektor nach einem der vorhergehenden Ansprüche, wobei der erste Szintillator (10) ein Kunststoffszintillator ist, der Folgendes umfasst:
- mindestens ein primäres fluoreszierendes Element,
- vorzugsweise mindestens ein sekundäres fluoreszierendes Element und
- mindestens ein neutronenabsorbierendes Element.

12. Detektor nach dem vorhergehenden Anspruch, wobei das primäre fluoreszierende Element aus Biphenyl, *meta-*Terphenyl oder 2,5-Diphenyloxazol ausgewählt ist und das neutronenabsorbierende Element Lithium, Bor, Cadmium oder auch Gadolinium umfasst.

13. Detektor nach einem der Ansprüche 1 bis 12, wobei die aktive Struktur (2) einen anorganischen Szintillator (60) umfasst, der zur Durchführung einer Gammaspektrometrie fähig ist, wobei sich der Szintillator vorzugsweise auf der Seite der Austrittsfläche (2c) der aktiven Struktur (2) befindet.

14. Detektor nach einem der vorhergehenden Ansprüche, wobei der Unterschied zwischen den Brechungsindizes von zwei benachbarten Szintillatoren höchstens 0,05 beträgt.

15. Verfahren zur Detektion und zur Diskriminierung von ionisierenden Strahlungen unter Verwendung eines Detektors (1) nach einem der Ansprüche 1 bis 14 und dessen Eintrittsfläche (2a) gegenüber einer Strahlungsquelle (R) exponiert ist, wobei das Verfahren den aus Folgendem bestehenden Schritt umfasst:
∘ ausgehend von zumindest der Kenntnis der mittleren Zerfallskonstanten der Szintillatoren das Analysieren des von der aktiven Struktur erzeugten optischen Signals, um die Beschaffenheit der Strahlung zwischen mindestens 4, vorzugsweise mindestens 5 verschiedenen Strahlungstypen zu unterscheiden.

16. Verfahren nach dem vorhergehenden Anspruch, wobei die Diskriminierung zwischen den verschiedenen Strahlungen mittels eines Impulsformdiskriminierungs-(PSD-)Verfahrens erfolgt.

17. Verfahren nach einem der Ansprüche 15 oder 16, wobei das von der aktiven Struktur (2) erzeugte optische Signal von einem Verstärker-Photonen-Elektronen-Wandler (5), insbesondere einer Fotovervielfacherröhre (PMT) oder einem Silicium-Fotovervielfacher (SiPM), erfasst wird, um in einen elektrischen Impuls umgewandelt zu werden.

18. Verfahren nach einem der Ansprüche 15 bis 17, bei dem der Detektor nach Anspruch 13 verwendet wird, wobei die Gammakomponente, wenn sie detektiert wird, spektrometrisch analysiert wird.

## Claims

1. Radiation detector (1) comprising an active structure (2) having an input face (2a) and an output face (2b) for incident ionizing radiation (R), the active structure comprising:
∘ a first organic scintillator (10) comprising at least one neutron absorbing material and enabling discrimination between fast neutrons, thermal neutrons and photons,
∘ at least a second scintillator (20) arranged in front of the first and capable of preferentially detecting alpha and/or beta radiation,
the scintillators having different mean photoluminescence decay constants due to the choice of their constituents, and the second (20) being thinner (e₂; e₅) than the first (e₁; e₄),
the active structure (2) comprising at least a third scintillator (30) arranged in front of the second (20), the third scintillator preferentially detecting alpha radiation,
the radiation detector (1) being **characterized in that** the assembly of scintillators of the detector is of the plastic scintillator type, the difference between the refractive indices of two adjacent scintillators being at most 0.5.

2. Detector according to Claim 1, comprising a gain photon-electron converter (5), especially a photomultiplier tube (PMT) or a silicon photomultiplier (SiPM), arranged behind the output face (2b) of the active structure for collecting the light emitted within the various scintillators (10, 20, 30).

3. Detector according to either one of the preceding claims, the scintillators (10, 20, 30) increasing in thickness going from the input to the output.

4. Detector according to any one of the preceding claims, the first scintillator (10) having a thickness (e₁; e₄) of between 3 and 100 mm, preferably between 5 and 10 mm.

5. Detector according to any one of the preceding claims, the second scintillator (20) preferentially detecting beta radiation and having a thickness (e₂; e₅) of between 50 and 250 microns, preferably between 100 and 250 microns, preferably equal to 150 microns.

6. Detector according to any one of the preceding claims, the third scintillator preferentially detecting alpha radiation (30) having a thickness (e₃; e₆) of between 1 and 50 microns, better still between 10 and 20 microns.

7. Detector according to any one of the preceding claims, the scintillators (10, 20, 30) having a mean photoluminescence decay constant value which decreases going from the input to the output.

8. Detector according to any one of the preceding claims, the difference between the values of the mean decay constants of two adjacent scintillators being between 25 and 250 ns, better still between 30 and 250 ns.

9. Detector according to any one of the preceding claims, the mean decay constant (τ₁, τ₄) of the first scintillator (10) being between 1 and 20 ns, especially of the order of 10 ns.

10. Detector according to any one of the preceding claims, the first scintillator (10) having an emission spectrum of which the maximum is at a wavelength of between 400 and 630 nm, in particular about 425 nm.

11. Detector according to any one of the preceding claims, the first scintillator (10) being a plastic scintillator comprising:
- at least one primary fluorescent element,
- preferably at least one secondary fluorescent element, and
- at least one neutron absorbing element.

12. Detector according to the preceding claim, said primary fluorescent element being chosen from biphenyl, meta-terphenyl or 2,5-diphenyloxazole, and the neutron absorbing element comprising lithium, boron, cadmium or gadolinium.

13. Detector according to any one of Claims 1 to 12, the active structure (2) comprising an inorganic scintillator (60) that is capable of performing gamma spectrometry, said scintillator preferably being on the side of the output face (2c) of the active structure (2).

14. Detector according to any one of the preceding claims, the difference between the refractive indices of two adjacent scintillators being at most 0.05.

15. Method for the detection and discrimination of ionizing radiation using a detector (1) according to any one of Claims 1 to 14 and the input face (2a) of which is exposed to a radiation source (R), the method comprising the step consisting in:
∘ analysing, at least on the basis of knowledge of the mean decay constants of the scintillators, the optical signal generated by the active structure so as to discriminate the nature of the radiation from among at least 4 different types of radiation, preferably at least 5.

16. Method according to the preceding claim, the discrimination between the different types of radiation being performed by means of a pulse shape discrimination (PSD) method.

17. Method according to either of Claims 15 and 16, the optical signal generated by the active structure (2) being collected by a gain photon-electron converter (5), especially a photomultiplier tube (PMT) or a silicon photomultiplier (SiPM), so as to be converted into an electric pulse.

18. Method according to one of Claims 15 to 17 using the detector according to Claim 13, the gamma component, when it is detected, being analysed spectrometrically.
